# EUROPEAN PATENT APPLICATION

(11) **EP 4 177 131 A2**
(43) Date of publication of application: **10.05.2023**
(21) Application number: 22205110.4
(22) Date of filing: 02.11.2022
(51) Int. Cl.: B61L 1/10, B60D 1/54, B60L 53/30, B60M 1/36, B61G 1/40, B61G 1/42, B61L 25/02

(54) **INTERFACE SYSTEM**

(30) Priority: 03.11.2021 GB 202115799
(71) Applicant: Kinghorn, John, Brockenhurst Hampshire SO42 7RF (GB)
(72) Inventor: Kinghorn, John, Brockenhurst Hampshire SO42 7RF (GB)
(74) Representative: CSY Herts

(57) **Abstract**

An interface connector for connecting to a rail vehicle, the rail vehicle comprising a coupling arrangement for coupling electrical power and data connections of the rail vehicle to the interface connector, the interface connector comprising: a controller; a coupling body having a head and a shank; a housing for mounting the interface connector to an immovable surface, the housing having an opening for receiving the coupling body therethrough, the coupling body being mounted to the housing via the opening such that the shank is within the housing, the mounting arrangement being such that the coupling body is moveable relative to the housing between a retracted position and an extended position, a distance between the head of the coupling body and the support housing increasing as the coupling body moves from the retracted position towards the extended position; and an extending mechanism that is arranged to be actuated by the controller to move the coupling body any distance between the retracted position and the extended position, wherein the head of the coupling body comprises: a connection interface for coupling land-based electrical power and data processing connections to the rail vehicle; and means for connecting the head to the coupling arrangement of the rail vehicle upon contact between the head and the coupling arrangement, wherein, in use, the interface connector is mounted to the immovable surface.

## Description

This invention relates to an interface system. In particular, the invention relates to an interface connector for mounting to a fixed surface. The interface connector is extendable and provides a combined electrical power and data interface for coupling to the electrical power and data connections of a vehicle.

### Background of the Invention

Modern passenger trains contain an extensive set of interface connections to distribute electrical and pneumatic energy, control signals and diagnostic data within and between the various vehicles. These interfaces are needed to ensure the correct functioning of a multitude of subsystems within the train when the train is being operated.

In addition to travelling, however, all rail vehicles spend some of their time stationary in well-defined positions. These positions might include at a station platform preparing for the next service, within a depot being examined or cleaned, in a siding temporarily out of use, etc. When the vehicles are stationary, the optimum interfaces are not necessarily the same as those in use when the train is moving. For example, if the train is diesel operated, it might be highly desirable to shut down its engine to reduce its noise and pollution, and obtain electrical power from a land-based source instead. Such an electrical supply is also useful for unpowered carriages if the locomotive hauling them is uncoupled to perform some other task.

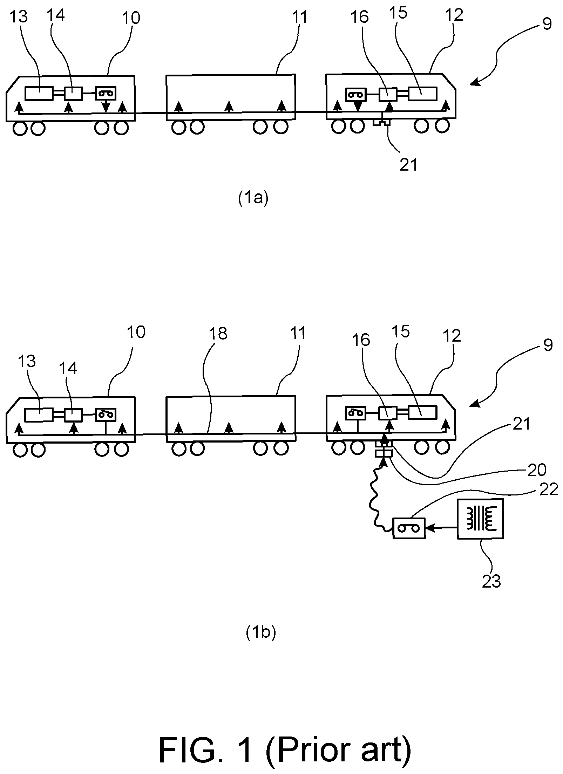

The technique of providing a land-based electrical power source is well established. As illustrated in Figure 1a, two end vehicles 10 and 12 of a train 9 have respective diesel engines 13 and 15 coupled to respective generators 14 and 16. The generators supply electrical power to the train when on the train is moving. As illustrated in Figure 1b, when the train 9 is stationary in a depot, a 'shore supply' connector socket 20 attached to a cable is manually plugged into a corresponding interface plug 21 on the train, the diesel engines are shut down and the generators 14 and 16 isolated. A control switchboard 22 is turned on to allow a local electricity supply 23 to now provide services on the train.

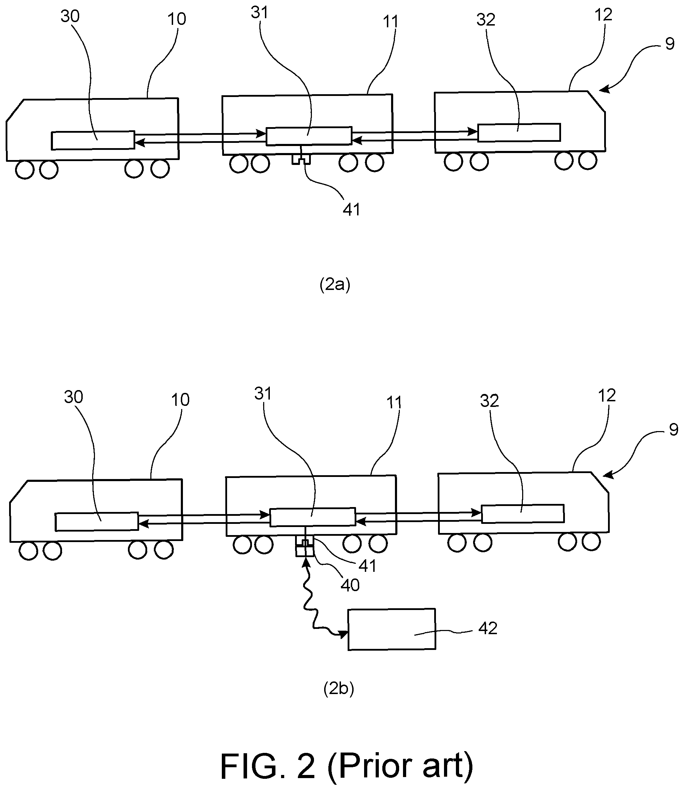

Similar techniques are utilised for accommodating data transfer to and from the train. As illustrated in Figure 2a, when in service on the move, all kinds of sensors and control functions in the vehicles 10, 11, 12 of the train may be monitored and the results stored in respective local data processing systems 30, 31, 32. These often have bidirectional interfaces (such as Ethernet rings) between the vehicles to allow data signals to be shared, monitored and controlled in service throughout the train 9. As illustrated in Figure 2b, when the train returns to a depot at the end of the day, an analytical computer system 42 may be manually plugged into a special interface on the train 9 via plug 40 and socket connectors 41. This allows key operating parameters, which vary during the day, to be investigated and faults identified, allowing any problems to be fixed by depot staff before they become too serious.

Electrical power and/or data interfaces are typically designed for particular trains, resulting in a multiplicity of standards to be dealt with. Quite often, the interface arrangements illustrated in Figure 1b and Figure 2b available in a particular location will only be compatible for a limited number of types of train, others having different voltage requirements, different interface connection arrangements, different data logging facilities, different control software, etc. Consequently, this may prevent different designs of trains from being coupled together in service.

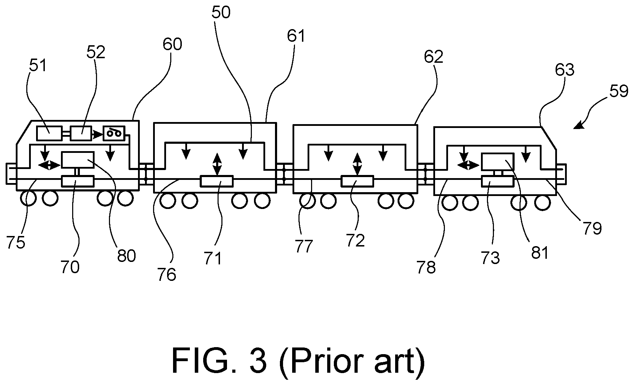

As illustrated in Figure 3, the interoperability of rail vehicles can be improved by adopting the illustrated train interfacing architecture, which shows the general principles of interfacing in two categories, 'electrical power' and 'data'. For power, bus lines 50 run throughout the train 59 to distribute electrical energy throughout the train as required, passing through couplers from one vehicle to the next. The operating voltages conform to a single set of standards, and the systems feeding them incorporate control arrangements allowing for the possibility of multiple power sources within the train, and also the possibility of accommodating energy storage systems which may absorb or generate power.

In the illustrated example in Figure 3, the train 59 comprises a diesel locomotive 60 which contains a diesel engine 51 and generator 52, two unpowered carriages 61 and 62 and an unpowered driving trailer 63; however, the arrangements allow for power to be generated and absorbed throughout the train as required. When two trains couple together, or uncouple, their respective energy management systems allow the redistribution of power to be arranged automatically, initially to a standard set of default conditions which can then be altered by train management computers if considered desirable.

For data, the architecture uses a standard interface module 70, 71, 72, 73 in each vehicle 60, 61, 62, 63. Each interface module collects together all the diverse interfaces for subsystems which may exist within its vehicle, and converts the data formats into a standard set of protocols. These protocols are then communicated via high speed bidirectional serial data links (optical fibres) 75, 76, 77, 78, 79 to adjacent vehicles via couplers, using time division multiplexing techniques to accommodate various data flows. In this example, links 75 and 79 at the ends of the train are not in use; the middle data links 76, 77, 78 allow interface modules 70, 71, 72, 73 to communicate with each other. Each interface module incorporates arrangements for data messages intended for other vehicles to be relayed on further down the train. When a data message reaches its intended vehicle, it is no longer relayed further, but instead is placed on the appropriate local interface which then passes to the corresponding subsystem, either to request some information by return or to control some function. When in service, these commands originate from a train management computer. In the example of Figure 3, the locomotive 60 and the driving trailer 63 each comprise a train management computer 80, 81. For controlling the train movement, one of the computers is activated depending on which of the locomotive or the driving trailer is in use at the time. The architecture allows for multiple train management computers to be present in any vehicles of the train, whereas other vehicles (such as simple carriages) may have none. At any time, any train management computer connected into the network may request information from anywhere else in the network, the high speed of the bidirectional serial links between vehicles being sufficient to cope with multiple requests simultaneously and to return results quickly with low latency.

In summary, the illustrated known architecture of Figure 3 allows for all kinds of rail vehicles in any combination to be coupled together freely in a compatible way. The train management computers present can then find out which vehicles are in the current train formations, their facilities and constraints, and determine which modes of operation are now possible, and which are not, automatically. In principle, any subsystem anywhere in the current group of coupled vehicles can be monitored and controlled from anywhere else in the train formation using this architecture.

Further local interfaces from the subsystems may be used to include data about the commodities carried within or on the vehicles, for example details about all the parcels within a van or the contents and destination of a container on a flat wagon. Although at present few freight vehicles have electrical power availability or data storage and processing facilities, inevitably there will be increasing demand in future to allow for such useful possibilities.

There is a need to improve the interoperability of all kinds of rolling stock in a given railway network, as well as the land-based interfaces utilised at stationary depots, which was once normal in a much simpler era a century ago. Further, coupling stationary vehicles with land-based interfaces can be somewhat onerous and time consuming, given the need to manually couple separate power and data interfaces to said vehicles.

The present invention aims to overcome or at least ameliorate one or more of the problems set out above.

### Summary of the Invention

According to one aspect of the present invention, there is provided an interface connector for connecting to a vehicle, the vehicle comprising a coupling arrangement for coupling electrical power and data processing connections of the vehicle to the interface connector, the interface connector comprising: a controller; a coupling body having a head and a shank; a housing for mounting the interface connector to an immovable surface, the housing having an opening for receiving the coupling body therethrough, the coupling body being mounted to the housing via the opening such that the shank is within the housing, the mounting arrangement being such that the coupling body is moveable relative to the housing between a retracted position and an extended position, a distance between the head of the coupling body and the support housing increasing as the coupling body moves from the retracted position towards the extended position; and an extending mechanism that is arranged to be actuated by the controller to move the coupling body any distance between the retracted position and the extended position, wherein the head of the coupling body comprises: a connection interface for coupling land-based electrical power and data processing connections to the vehicle; and means for connecting the head to the coupling arrangement of the vehicle upon contact between the head and the coupling arrangement, wherein, in use, the interface connector is mounted to an immovable surface.

The interface connector provides several advantages. Firstly, there is no need for special interconnection wiring to plugs and sockets in the vehicles: the interfaces already in place for sharing power, control signals and data between vehicles when coupled also can be used for interconnection to land-based electrical power and data processing functions instead. Further, connection and disconnection of the land-based electrical power and data processing functions to and from the vehicles in a formation may occur automatically and can be controlled from within any of the coupled vehicles or from any local or remote control point or workstation.

In other words, the extending mechanism is arranged to be actuated by the controller to move the coupling body any distance between the retracted position and the extended position such that the connection interface of the interface connector and the coupling arrangement of the vehicle can couple together without requiring any rail vehicle movement (i.e., independent of rail vehicle movement). This removes the need for a member of staff in the vicinity to manually plug in or unplug connectors - no rail vehicle movement is required for the interface connector to connect (both physically and electrically) to the coupling interface of the rail vehicle. The extending mechanism is thus arranged to move and hold the coupling body at any distance between the retracted position and the extended position.

Further, the comprehensive range of combined electrical power and data interfaces available through the coupler heads allows many different functions to be performed simultaneously, perhaps with different actions in different vehicles of the coupled formation. Further, more than one stationary train can be serviced from a single land-based installation of the interface connector, by the simple method of temporarily coupling the trains together, an action which does not require further vehicle movement when the train must uncouple. The interface connector provides a combined power and data interface for vehicles to couple their power and data connection to land-based power and data processing functions. Compared with conventional methods of manually plugging in cables into appropriate sockets in vehicles, the interface connector allows the coupling process to be suitably controlled, and is thus more accurate, safer and less time consuming. The connection between the vehicle and the interface connector is also more robust than a cable, which could be cut easily. The interface connector is particularly useful for autonomous robotic vehicles, as connection and disconnection between the interface connector and rail vehicle is arranged to occur automatically (i.e., with no need for human intervention). In other words, no physical human input (such as the moving of the rail vehicle for shunting and/or manual plugging in of cables) is required for connection and disconnection to occur between the interface connector and the rail vehicle.

Preferably, the shank of the coupling body is mounted to the housing via the extending mechanism, a portion of the shank being in threaded engagement with the extending mechanism, the extending mechanism being mounted to the housing via a bearing arrangement. The bearing arrangement may be mounted to the housing via a gimbal frame.

Preferably, the interface connector further comprises an actuator that is arranged, via the controller, to actuate the extending mechanism to move the coupling body relative to the housing. The actuator may be arranged to rotate the extending mechanism relative to the shank to move the coupling body relative to the housing.

In a preferable arrangement, the interface connector includes a proximity sensor connected to the controller and arranged to detect the vehicle as the vehicle approaches the interface connector, an output of the proximity sensor corresponding to a position of the vehicle relative to the proximity sensor. A detection range of the proximity sensor may be arranged to extend beyond the connection range of the interface connector for determining when the vehicle is proximate to the connection range.

Preferably, the proximity sensor comprises a sensor housing and a sensing element, the sensing element being provided by the housing for detection. In other words, the sensing element is suitably arranged on or in the housing such that it is suitably positioned for detection. In a preferable arrangement, the interface connector further comprises a second sensing element, the first and second sensing elements being transversely opposed and arranged either side of a central longitudinal axis of the sensor housing, the sensing elements being angled towards the central longitudinal axis. The sensing elements may be spaced relative to one another to provide the detection range of the proximity sensor. In some cases, there may be more than two sensing elements or other spatial arrangements of the sensing elements.

Preferably, the sensing element comprises an optical sensor arrangement the sensor housing having a light transmissible cover, the optical sensor arrangement being arranged within the sensor housing for detection via the covering. The optical sensing element could however be another suitable type of sensor that is able to detect the presence of an object without physical contact, such as a capacitive or inductive sensor etc. In some cases, there may be no cover provided by the housing, the sensor arrangement instead being provided on the housing for detection.

Preferably, the optical sensor arrangement comprises an emitter for emitting light; and a pair of receivers for receiving emitted light, an amount of emitted light received by each receiver corresponding to a position of the coupling arrangement of the vehicle relative to the receivers, wherein the emitter and the pair of receivers are arranged colinearly relative to each other, one of the receivers being at an end of the sensor housing proximate to the interface connector and the other receiver being at a distal end of the sensor housing, the emitter being arranged between the pair of receivers. A predetermined subrange of the detection range of the proximity sensor may be determined by at least one of the outputs of the receivers, the predetermined subrange corresponding to an optimal coupling range between the head of the coupling body the coupling arrangement of the vehicle.

In one arrangement, the controller or the vehicle is arranged to initiate connection between the head of the coupling body and the coupling arrangement of the vehicle based on the output of the proximity sensor. In this way, the coupling process between the vehicle and the interface connector can be initiated automatically in response to an output of the proximity sensor.

In a preferable arrangement, the interface connector further comprises a display means connected to the controller, the controller being arranged such that the display means produces a visual warning signal in response to the output of the proximity sensor. A colour of the warning signal may correspond to a position of the vehicle relative to the proximity sensor, the colour being determined by the output of the proximity sensor. In this way, the visual warning signal can indicate when a vehicle is in a suitable position for connecting to the interface connector.

Preferably, the means for connecting the head of the coupling body to the coupling arrangement of the vehicle is a Scharfenberg coupling arrangement. In some cases, the means for connecting the head of the coupling body to the coupling arrangement of the vehicle may be another suitable mechanical coupling means for connecting the head of the coupling body to the coupling arrangement of the vehicle.

The invention also provides a combination comprising the interface; and a vehicle having a coupling arrangement for coupling electrical power and data processing connections of the vehicle to the interface connector. The coupling arrangement may be moveable relative to the vehicle between a retracted position and an extended position, a distance between the coupling arrangement and the vehicle increasing as the coupling arrangement moves from the retracted position towards the extended position. In other cases, the coupling arrangement of the vehicle is not moveable. The vehicle may be part of a formation comprising one or more other vehicles, the electrical power and data connections between each vehicle being coupled together such that the electrical power and data processing connections of the formation is coupled to the interface connector when the interface connector is coupled to the vehicle. In this way, the interface connector can service each vehicle within a formation of vehicles that is connected to the interface connector.

In one arrangement, the vehicle is a railway vehicle, and the interface connector is mounted proximate to an end of a railway track such that the head of the coupling body of the interface connector faces the coupling arrangement of the railway vehicle as the railway vehicle approaches the interface connector. In this arrangement, preferably, the proximity sensor of the interface connector is mounted to the railway track such that the proximity sensor is between the interface connector and the railway vehicle as the railway vehicle approaches the interface connector, the proximity sensor having a height such that the proximity sensor is below the railway vehicle as the railway vehicle approaches the interface connector. Preferably, the interface connector is mounted to the railway track via a buffer such that contact points of the buffer for contacting the railway vehicle are between the interface connector and the vehicle when the coupling body of the interface connector is in the retracted position.

### Brief Description of the Drawings

Embodiments of the invention will now be described by way of example, with reference to the drawings in which:-
Figures 1a and 1b illustrate cross-sectional views of a prior art arrangement for coupling land-based electrical power connections to a train formation;
Figures 2a and 2b illustrate cross-sectional views of a prior art arrangement for coupling land-based data processing connections to a train formation;
Figure 3 illustrates a cross-sectional view of a prior art arrangement of a data architecture used to allow communication between the subsystems of vehicles in a train formation;
Figure 4a illustrates a perspective view of a interface connector of the present invention mounted in use on a railway track, the coupling body of the interface connector being in the retracted position, and Figure 4b illustrates the interface connector of Figure 4a with the coupling body in the extended position;
Figure 5 illustrates a perspective view of the coupling body of the interface connector;
Figure 6a illustrates a front cross-sectional view and Figure 6b illustrates a side cross-sectional view of the extending mechanism of the interface connector for extending and retracting the coupling body;
Figures 7a, 7b, 7c, 7d and 7e illustrate side views of the overall coupling process between the interface connector and a vehicle having a coupling arrangement that is stopped within the connection range of the interface connector;
Figures 8a, 8b, 8c, 8d and 8e illustrate schematic views of the interface connector coupled to land-based electrical power and data processing connections via the control centre, as well as the process for an example train formation coupling to the interface connector and, subsequently, a vehicle in the formation uncoupling from the train formation;
Figure 9 illustrates a front view of a the male interface contact of the connection interface of the coupler head;
Figure 10 illustrates a more detailed schematic view of the control centre;
Figure 11a illustrates a perspective view of the proximity sensor mounted on a railway track and the display head mounted behind the proximity sensor, Figure 11b illustrates a front view of the LED arrangement of the display head and Figure 11c illustrates an enlarged perspective view of the proximity sensor showing the optical components mounted thereon;
Figure 12a illustrates a detection range of the proximity sensor and a vehicle passing of the sensor as it approaches the interface connector, and Figure 12b illustrates a sensor output of the photodetectors vs the position of the approaching vehicle relative to the sensors, as well as the in range signal;
Figure 13 illustrates example circuit arrangements for the LED light source, the photodetectors, and the corresponding drive circuits of the blue and red LED's in the display head;
Figures 14a and 14b illustrate perspective views of an alternative mounting arrangement for the interface connector to a railway track;
Figures 15a, 15b and 15c illustrate cross-sectional views of the coupling arrangement of a vehicle that is non-extendable, as well as the coupling process between this arrangement and the interface connector;
Figure 16a illustrates a cross-sectional view of the shields of the non-extendable coupling arrangement of the vehicle in the closed position, and Figure 16b illustrates a cross-sectional view of the shields of the non-extendable coupling arrangement of the vehicle in the open position.
Figures 17a, 17b, 17c, 17d, and 17e illustrate an example implementation of the interface connector with a long-distance overnight sleeping car train arrangement having vehicles with extending coupling arrangements; and
Figure 18 illustrates a further example implementation of the interface connector with a tram having a non-extending coupling arrangement.

### Detailed Description

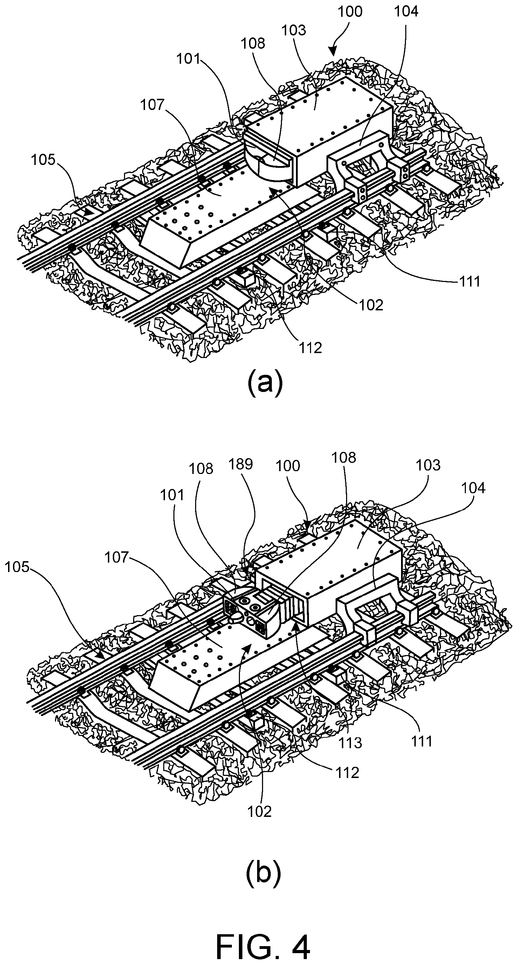

In Figures 4a and 4b, an interface connector in accordance with the present invention is shown mounted on a railway track as item 100. The interface connector comprises a coupling body 102 that is mounted within a housing 103, and, in some embodiments, a proximity sensor 107. The configuration of the proximity sensor will be described later on.

The housing 103 is arranged to be mounted to an immovable surface such that the interface connector is fixed in place (for example, relative to a ground surface). This means the interface connector is mounted to a static or fixed structure or surface (i.e., a structure or surface that does not comprise inherent or active mechanisms for substantially moving the structure or surface. In other words, the surface or structure is fixed relative to a ground surface and is not arranged to move during any neutral and/or active modes of operation of the surface of structure.

In this embodiment, the housing 103 is mounted to a railway track 105 via transversely opposed frame members 104 (only one of which is visible in Figures 4a and 4b). The frame members 104 perform a similar function to the structure of a conventional buffer stop, but are lower in height as the interface connector is located nearer the track than conventional buffers. Each frame member is securely bolted to the track 105, providing a permanent installation of the interface connector at the end of a railway line. However, these fixtures can readily be removed to remove the interface connector from the line as required. In this way, the interface connector can be temporarily mounted to a line, such as on a section of line closed to through traffic, e.g. during new construction or remodelling work, disruption due to infrastructure issues, etc.

The coupling body is arranged to provide a connection interface for connecting to a correspondingly configured coupling arrangement of an approaching vehicle for coupling the electrical power and data connections of the vehicle to local or land-based electrical power and data connections (such as those provided by a railway station for preparing a vehicle for its next service). Local or land-based electrical power and data connections in this context means connections that are provided as local infrastructures such as those that would be used typically in buildings or other static facilities of various kinds. The local infrastructures typically rely on further interconnections to provide their energy, services and facilities, such as those provided by power stations or data processing centres located elsewhere; however sometimes these might be more local in the vicinity of the interface connector, for example a solar energy farm or a computer located in a railway station building. Some or all of the electrical energy and/or data connections provided for the use of the interface connector are configured in conventional fashion to be available in a fixed location, i.e. they are not configured to be easily moved.

The coupling body 102 is further arranged to be moveable relative to the housing between an extended position (shown in Figure 4b) and a retracted position (shown in Figure 4a) for facilitating the connection of the interface connector to the coupling arrangement of an approaching vehicle. The arrangement of the coupling body 102 to provide the connection interface between an approaching vehicle and land-based power supplies and data processing functions will first be described.

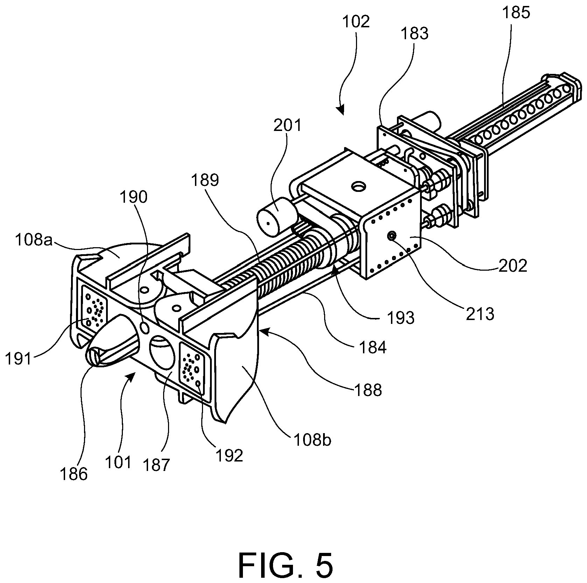

As illustrated in Figure 5, the coupling body 102 comprises a coupler head 101 that is mounted to a distal end 188 of an elongate tube 189. The tube 189 passes through an opening 113 in the housing 103 (seen in Figure 4b) and is mounted to the housing via an extending mechanism 193, the configuration of which will be described later on.

The coupler head 101 has a substantially rectangular body, with an inner face which mounts to the tube 189, and an opposing outer face which is configured as a connection interface 187. The connection interface comprises a central Scharfenberg-style mechanical coupling arrangement 186 and a pair of transversely opposed interface contacts 191, 192. When the interface connector is installed for use, various land-based electrical power and data connections are coupled to the interface contacts. These connections are first terminated within the coupler head 101 and then coupled to the interface contacts. Other land-based connections (such as pneumatic connections) may also be coupled to the connection interface 187.

The land-based electrical power connections comprise high-power connections and low-power connections. The data connections may be for example optical fibre connections. As the coupling body 102, and thus the coupler head 101, is arranged to be moved relative to the housing 103, the terminated land-based connections are configured to accommodate this movement. The low-power and data connections are arranged in a flexible, extensible spiral formation as described in the application EP3590785A1, which is incorporated herein by reference. These spiralled connections 185 pass within the tube 189, before reaching the coupler head 101. The land-based high-power connections are accommodated via an intermediary connection arrangement. The high-power connections are first terminated at a plate 183 that is fixed relative to the coupling body 102. Electrical conductive rods 184 connected between the plate and the coupler head 101 electrically couple the terminated high-power connections to the interface contacts 191, 192. The rods are fixed to the coupler head but may move relative to the plate such that the rods may accommodate movements of the coupling body 102.

The mechanical coupling arrangement 186 is arranged to mechanically connect to the coupling arrangement of an approaching vehicle upon contact between one another. In this regard, the coupling arrangement of the vehicle has the same structure and functionality as the coupling body 102 described above. In other words, the coupling arrangement of the vehicle comprises a coupler head providing a connection interface that is coupled to the electrical and data connections of the vehicle, the coupler head being extendable relative to the vehicle via an extending mechanism, the function of which is controlled by a controller of the vehicle (such as a train computer). In some cases, the coupling arrangement of the vehicle may not be the same structurally and functionally as the coupling body 102, but may be situationally and functionally similar to the coupling body such that the coupling arrangement is compatible with and is able to connect to the connection interface 187 of the interface connector 100. The mechanical coupling arrangement 186 of the coupler head 101 engages the mechanical coupling arrangement of the approaching vehicle upon contact between the two, mechanically connecting the coupler head 101 to the connection interface of the vehicle.

The mechanical coupling 186 includes facilities for opening a compressed air connection to the vehicle when the interface connector is in use. The compressed air passes through the orifice 190 at the centre of the connection interface 187. One of the interface contacts 191 is arranged as a female 'socket', and the other interface contact 192 as is a male 'plug' with retractable pins. For additional safety and security against the environment, the pins of the interface contact 192 retract when out of use and are covered by a shutter.

The land-based electrical power and data connections are divided equally between the male and female interface contacts 191, 192 and connected effectively in parallel, so that electrical power and data interfaces provided by the connection interface 187 are duplicated for better reliability. If one of the contacts fails to connect to the vehicle properly, all the power and data interfaces will still function fully (although the maximum current carrying capacity of the high-power bus lines may be reduced).

In this way, the coupling body 102 is arranged to connect to the coupling arrangement of a vehicle, providing a connection interface between the electrical power and data connections of the vehicle and the land-based electrical power and data connections coupled to the connection interface 187. In other words, the coupler head 101 is arranged to provide an electrical power and data interface for supplying the vehicle with land-based electrical power and data processing functions (i.e., allows the transfer of data to and from the vehicle).

The arrangement for allowing the coupling body 102 to be moved relative to the housing 103 will now be described. As described above, the tube 189 is mounted to the housing 103 via the extending mechanism 193. The extending mechanism is arranged to be actuated to cause linear motion of the tube 189 (along a longitudinal length of the tube). In this way, the tube, and thus the coupler head, can be moved axially relative to the housing 103.

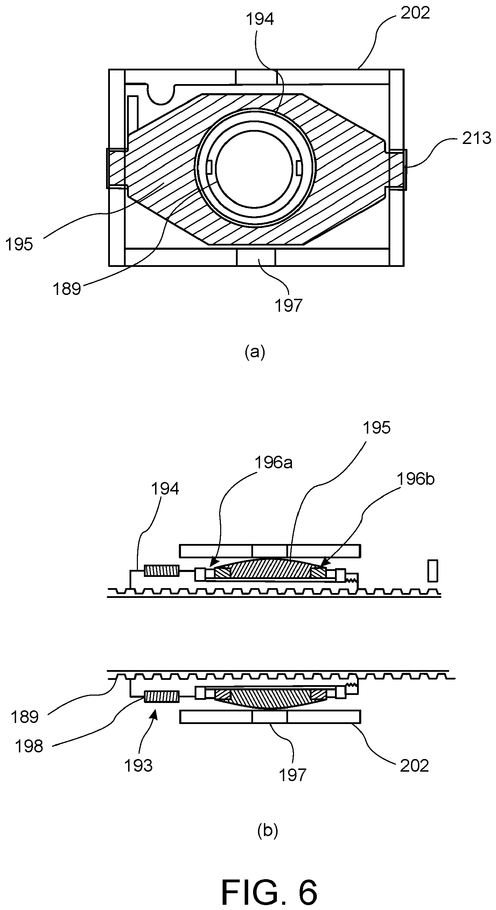

As illustrated in Figures 6a and 6b, the extending mechanism 193 comprises a rotatable cylinder 194 that substantially encircles, and is in threaded engagement with, the tube 189 via a thread on an outer surface of the tube that is received by complementary shaped threading on an inner surface of the cylinder. The cylinder passes through the bore of a support block 195 and is mounted to the same via bearing arrangements 196a, 196b (such as thrust bearings) such that the cylinder is constrained axially but may rotate (along a longitudinal length of the cylinder) relative to the support block. The support block is also arranged to constrain the tube 189 rotationally (such as grooves on the tube receiving or mating with complementary shaped protrusions provided by the support block). In this way, the tube 189 is constrained rotationally but allowed to move axially (along a longitudinal length of the tube) such that rotation of the cylinder causes axial movement of the tube 189, and thus the entire coupling body 102.

The tube 10, cylinder 194 and support block 195 comprise a structurally robust material, such as metal.

The support block 195 is mounted to the housing 103 via a gimbal frame 202, the block being mounted to the gimbal frame via bearings 213 (only one of which is shown in Figure 5) such that the support block may pivot relative to the gimbal frame 202 in a vertical plane (along a horizontal axis of the support block). The gimbal frame 202 is mounted to the housing 103 via bearings arrangements 197 on its upper and lower faces which permit the gimbal frame, and thus the tube, to pivot in a horizontal plane (along a vertical axis of the gimbal frame) to accommodate sideways movements of the coupling body 102.

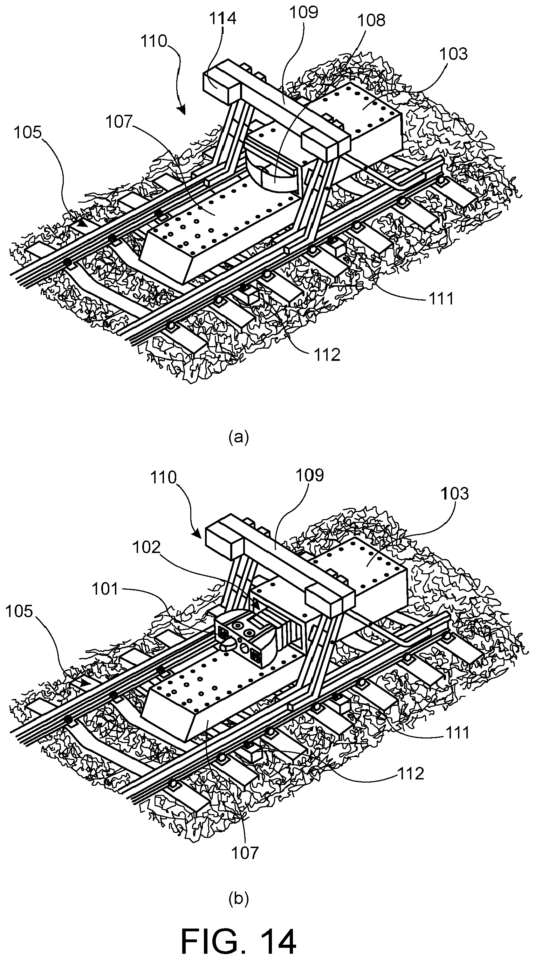

The cylinder 194 is arranged to be rotated by an extension motor 201 that is rotationally coupled to the cylinder via a toothed belt 198. Therefore, rotation of the motor causes rotation of the cylinder - the motor serves as a means to drive the cylinder when the motor is actuated (such as by a controller). In this way, the coupling body 102 can be moved a desired distance relative to the housing 103 by controlling actuation of the extending mechanism 193 - the direction of the linear motion of the tube 189 depends on the direction the motor is rotating. The motor 201 is arranged to ensure that its spindle is locked in position and cannot rotate when power is not being applied to the motor, i.e. when the motor is not being actuated. The skilled person will understand how the extension motor is arranged to ensure its spindle is locked in position when power is not being applied. In some embodiments, a flexible cover (shown in Figures 4b and 14b) is attached between the coupler head and the housing, which encircles and protects the tube 189 and the conductive rods - the cover is able to extend and retract in tandem with the coupler head.

As described above, the housing 103 provides an opening 113 for receiving the coupling body 102 therethrough such that the tube 189 is within the housing, a space within the housing being sufficient to accommodate the length of the tube 189. The tube 189 is orientated such that movement of the tube relative to the housing causes the coupler head 101 to move towards or away from the housing (depending on which way the motor 201 is rotating).

The tube 189 is configured such that limit positions of the tube can be detected to stop the motor 201 when these positions have been reached. In this way, an extendable or connection range of the tube, and thus the interface connector, can be determined and controlled. This is achieved via a sensing arrangement that is able to detect when the tube reaches a fully extended limit position (i.e., the coupler head is extended a maximum distance from the housing) and a fully retracted limit position (i.e., the tube is fully within the housing, and the coupler head occupies the opening 113 as shown in Figure 4a). The tube 189 can thus be moved any distance between these limit positions by suitably controlling the motor 201 (or actuating the extending mechanism), allowing the interface connector to be able to couple to the coupling arrangement of a vehicle any distance between its coupling range. The connection range of the extending coupler may thus correspond to a distance between the coupler head in the fully extended position and the fully retracted position - beyond the connection range, the coupler head would not be able to connect to the coupling arrangement of another vehicle, unless said arrangement is brought into the range.

Thus, the coupling body 102 is arranged to be moved (via the extending mechanism) any distance between a retracted position (seen in Figure 4a) and an extended position (seen in Figure 4b). In the retracted position, the coupling body 102 is substantially contained within the housing, protecting the body from undesirable weather and unauthorised interference. More specifically, in this position, the tube 189 is fully within the housing and the coupler head 101 is partially within the housing.

The coupler head 101 comprises a pair of protective shields 108a, 108b that are arranged to conceal the connection interface 187 when the coupling body is in the retracted position. The shields are pivotally connected to the body of the coupler head 101. As the head is retracted to within the housing, the shields engage portions of the housing and are pivoted in an arc towards one another, creating a physical barrier around the connection interface. The shields thus remain firmly closed when the interface connector is out of use. The shields are biased such that once the coupler head 101 clears the housing, the shields pivot outwards to their open position (shown in Figure 4b). Thus, the interface connector components are well protected in both the active and out of use positions, only being exposed to the environment transiently during the process of connecting or disconnecting to the coupling interface of a vehicle. In some embodiments, the shields may be biased such that they partially open (i.e., they occupy a position between their open and closed position) when the coupler head 101 clears the housing. In this case, the shields are pushed into their fully open position (shown in Figure 4b) as they contact the shields of the coupling arrangement of another vehicle.

A distance between the coupler head 101 and the housing increases as the coupling body 102 moves from the retracted position to the extended position. In the extended position, the coupler head 101 reaches an upper end of the connection range of the interface connector.

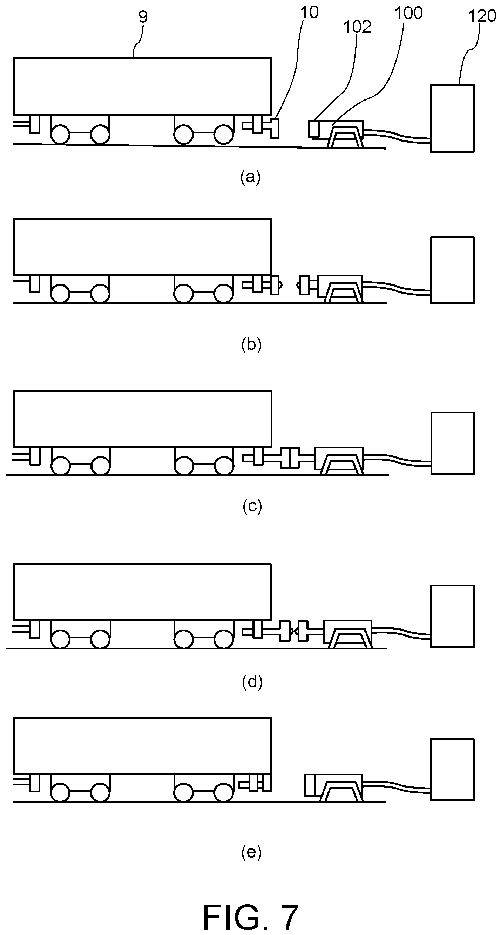

As illustrated in Figure 7a, the overall coupling process between the interface connector 100 and a vehicle 9 having a corresponding connection interface 10 begins with the coupling body 102 in the retracted position. In this example, the connection interface of the vehicle is extendable in the same way as the coupling body of the interface connector. The vehicle 9 approaches the interface connector and stops within the connection range of the interface connector. After the interface connector 100 and vehicle are ready to couple (such as responding to couple commands sent from respective control systems), the coupling body 102 and connection interface 10 of the vehicle 9 start extending towards one another as illustrated in Figure 7b. Upon contact, the coupling body 102 and connection interface 10 become mechanically connected together (shown in Figure 7c). Confirmation of successful mechanical connection causes the extension process to stop. The interface contacts are then electrically coupled together, coupling the electrical power and data connections of the vehicle to the land-based electrical power and data connections.

For uncoupling the vehicle from the interface connector, the process starts from the connected arrangement shown in Figure 7c. When the interface connector 100 and vehicle are ready to uncouple (such as via uncouple commands sent from respective control systems), first the electrical and data contacts are disconnected. Then the mechanical coupling mechanism is disengaged so that the coupling body 102 and connection interface 10 are free to separate from each other. The retraction process is then activated so that the coupling body 102 and connection interface 10 start to move away from each other as shown in Figure 7d. Finally, the coupling body 102 and connection interface 10 reach their respective fully retracted positions (shown in Figure 7e), retraction stops and the uncoupling process is complete.

In other examples, the connection interface of the vehicle may not be extendable. In this case, the vehicle 9 may need to stop in closer proximity to the interface connector 100, which will then extend towards and engage the fixed connection interface of the vehicle.

The extending arrangement of the interface connector is advantageous because it is not necessary for the vehicle to physically shunt onto the mechanical coupling arrangement of the interface connector to couple to it, as is required with conventional vehicle coupling arrangements. In other words, coupling or uncoupling can be controlled independently of the vehicle movement and the jolts to the vehicle experienced when using a conventional automatic coupler is avoided.

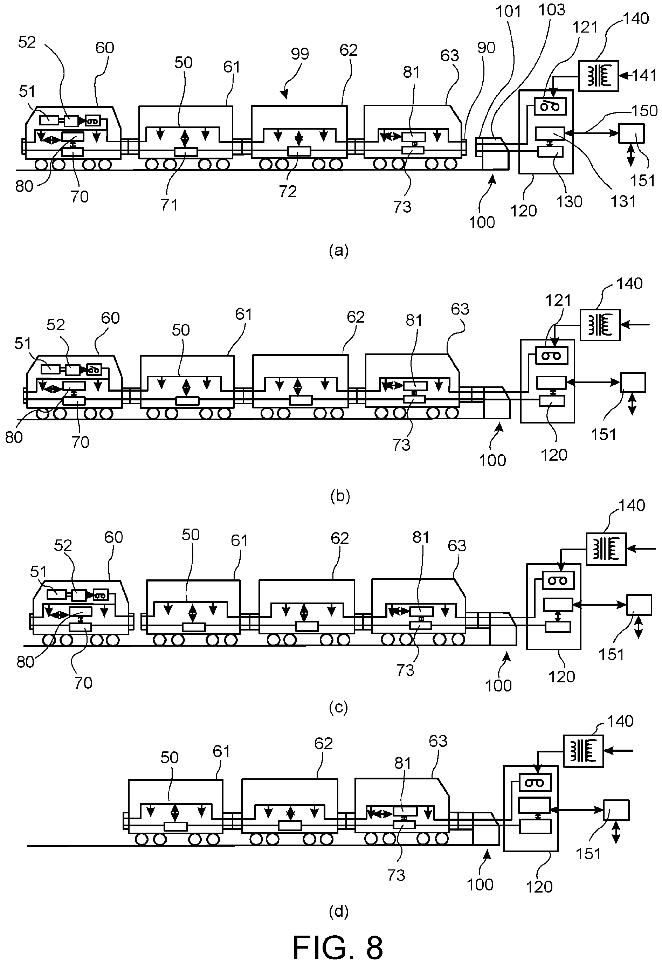

As described above, land-based electrical power and data connections are coupled to the interface connector 100 (more specifically to the connection interface 187 of the coupler head 101) when the interface connector is installed for use. As illustrated in Figure 8a, in this embodiment, these land-based connections are provided to the interface connector via a control centre 120 (i.e., a controller arrangement), which is located near to the interface connector (such as on a railway station platform, in an office or depot, beside the track in a freight yard, or some other convenient location). The control centre may only be accessible by authorised staff and may be in the form of a cabinet. In other embodiments, a simplified version of the control centre may be mounted within the housing of the interface connector.

The control centre 120 comprises several items providing interfaces, services and local controls, together with testing and monitoring facilities, which will differ depending on the application the interface connector is being utilised with. An electrical switchgear 121 provides control, current monitoring and overload protection for the high-power ("hotel power") electrical supply to the interface connector 100. The control centre 120 also contains further power supplies (not shown in Figure 5) for other equipment in the interface connector 100 and the control centre 120. These facilities will be described later.

For the data connections (or services), the control centre 120 comprises a standard interface module 130 as previously described (shown if Figure 3 as 70, 71, 72, 73). The interface module interfaces with a train management computer 131. The computer 131 comprises a display screen and user input functionalities, in a similar fashion to the facilities provided in a driving cab on a train. An authorised member of staff can therefore access the display screen and user inputs of the computer 131, and thus can monitor and control functions in any of the rail vehicles of a train 99 currently connected to the interface connector, just as a driver would be able to do from the controls in a driving cab. The coupling and uncoupling process of the interface connector (which involves actuation of the extending mechanism 193) can thus be controlled via the control centre 120. For example, the extension motor 201 of the extending mechanism 193 is controlled by electronic circuits within the housing 103 (not shown) which respond to instructions from the interface module 130 using control signal cables between the housing 103 and control centre 120.

A transformer 140 supplies electrical power to the interface connector (as well as the control centre 120) via a local high-voltage distribution network 141 in the same way as a conventional 'on-shore' power supply arrangement. Due to the above described arrangements, the interface connector 100 may for example be capable of supplying loads of up to 400kW. If there are multiple interface connectors nearby in a particular installation, one larger transformer might supply multiple interface connectors.

In simple cases, most of the functions of the train are controlled from within the train and only occasional use of the control facilities within the control centre 120 is required. However, the control centre 120 also comprises a high speed interface line 150 (which may take various known appropriate forms). This allows more powerful control and data processing facilities 151 to be connected to the control centre 120 as desired, such as fault diagnostic equipment or cargo tracking, which might be located nearby but more typically might be a long distance away. In practice, there might be several interconnections and multiple processing systems, in the same or different locations, to cover different aspects of the coupled vehicles' facilities as required in any particular situation.

In Figure 8a, a similar train 99 to that described earlier in connection with Figure 3 arrives at a terminus and stops in close proximity to the interface connector 100. This train differs from the train described in Figure 3 in that the train 99 comprises a coupling arrangement 90 that is compatible for coupling with the connection interface 187 of the interface connector 100. The train 99 comprises a locomotive 60, which contains an engine 51 and a generator 52, two unpowered carriages 61 and 62 and an unpowered driving trailer 63. The train 99 has stopped close enough to the interface connector 100 such that the coupling arrangement 90 of the train is within the connection range of the interface connector 100.

In this example, the coupling arrangement 90 is extendable in the same way as the coupling body 102 of the interface connector 100. The exact position of the stationary train 99 is not critical, as long as it is within the coupling range allowed for the combination of the extending coupling arrangement 90 on the driving trailer 63 and the extending interface coupling body 102. The interface connector 100 is mounted to the railway track such that the coupler head 101 is at the correct nominal distance above rail level so that it can connect to the coupling arrangement 90. Small variations in either horizontal or vertical positions of the arrangement 90 and the head 101 (caused e.g. by track curvature or vehicle suspensions varying in height under different loads) are accommodated, as the tube 189 of the coupling body 102 is able to pivot vertically and horizontally (described above).

The overall interfacing system (comprising the interface connector 100, control centre 120, transformer supply 140 and any connected data processing facilities 151) comprises various protocols for controlling the coupling and uncoupling process between the connections of the vehicle and the land-based power supply and data processing functions. For example, in the event of a power supply interruption, the interface connector is arranged to supply electrical power before other sources of supply can act. Further, during the interruption, in the absence of any train management computers elsewhere in the coupled train formation, the control centre 120 will take control of operations of the train before other sources of control can act. If there are other train management computers present, similar protocols are applied to those used when two trains couple so that all the management computers agree which one takes control.

The coupling and uncoupling process between the train 99 and the interface connector 100 is controlled via the exchange of commands between the train management computers and the control centre 120. For example, a driver in the driving trailer 63 may transmit a request to couple to the interface connector, with the vehicle's train management computer (for example 81) remaining in use after connection to the interface connector has been achieved. If desired, the driver can then relinquish control from the trailer and request the train management computer 131 to take over control instead. The driver may leave the train with that driving cab out of use. The next driver to join the train can request to regain control from the stationary train management computer 131 and put the driving trailer back in use, for example activating train management computer 80 in the locomotive 60 for a return journey.

The train 99 illustrated in Figure 8a may be in the station for some time. In this case, it is desired to shut down the engine 51, to reduce associated noise and pollution, but maintain lighting, heating, air conditioning and other on-train services active. In this case, the driver in the driving trailer 63 may activate a control requesting connection to the interface connector 100. This control initiates software in the associated train management computer 81 to send a command to couple from the interface module 73 in the driving trailer 63. The interface module 73 is able to determine whether it is in the front of the train formation, proximate to the interface connector 100. The interface module thus transmits the appropriate couple command to the coupling arrangement 90, which in turn may issue a wireless transmission to the corresponding control system of the interface connector 100 requesting permission to couple.

Unless the interface connector 100 is blocked from coupling, the control system of the interface connector 100 returns a wireless signal to the coupling arrangement 90 of the vehicle agreeing to couple. The extending mechanisms of the coupling arrangement 90 and the coupling body 102 are then actuated or activated, and the coupling arrangement 90 and the coupler head 101 extend towards one another until they join and couple together, as shown in Figure 8b.

The interface connector 100 and the coupling arrangement 90 of the train 99 are each arranged to generate a 'coupling event' signal during the coupling process. The energy management system in the train 99 is arranged to detect this signal and, upon detection, switch off the supply of electrical power on the bus lines 50. When the 'coupling event' signal ceases (indicating that coupling is complete) the train energy management system is arranged to switch on the supply of electrical power to bus lines 50 after a pre-determined time period. However, the energy management system in the control centre 120 (part of switchgear 121) also detects the ending of the 'coupling event' signal and is arranged to supply power to the bus lines 50 in a shorter pre-determined time period than that of the systems in the train. Consequently, the interface connector 100 now supplies power to bus lines 50 before the train's own energy management system can act. Having detected power is already being supplied to bus lines 50, the train energy management system is arranged to cease attempting to apply power itself and the supply from the generator 52 remains disconnected from bus lines 50. If, the purpose of coupling to the interface connector was not to obtain power, but to use the data connections only, commands from the train management computer 81 (initiated by the driver or automatically by some software linked to the desired conditions) can be sent to the train management computer 131 to turn off the switchgear 121 and then to reinstate power from within the train.

Returning to Figure 8b, power is now being supplied to the train 99 from the interface connector (via the control centre 120) and the driver may now shut down the engine. Most (if not all) on-train systems will source their electrical power from bus lines 50, so among other things, train management computers 80 and 81 will operate as normal. However, some of their functions may be overridden by the train management computer 131 in the control centre 120. For example, a full brake application may be demanded, normally as repetition of the full brake application already previously made by the driver, and appropriate warning messages are caused to appear on the monitor screens of the driving trailer. Further, traction controls may be blocked, a target speed of zero being enforced so that traction power cannot be mistakenly applied. These measures may indicate to drivers joining the train 99 that the train must uncouple from the interface connector 100 first before the train is able to move.

In order to control and operate the Scharfenberg-style mechanical coupling arrangement 186, the control centre 120 further comprises an air compressor and air reservoir (not shown), which will be coupled to the pneumatic connections of the train 99 via the connection interface 187 of the coupler head 101. When coupled, air pressure is maintained so that braking and suspension systems remain in an appropriate state indefinitely, and air operated doors giving access to the train or within it can still operate in the absence of power from a locomotive (or even with the disappearance of any vehicle in the formation with an air compressor). Consequently, the train 99 is firmly secured in a stationary position and may remain as such as long as required with, if desired, all on-train facilities still active in the usual way.

With the train 99 coupled to the interface connector 100, the connector 100 thus allows various information processing and data transfer to/from the train to occur at the same time as land-based electrical power is supplied to the train 99. The data transfer to and from the train may for example relate to: preparations for the next journey the train is due to undertake (such as a schedule of the intended journey, route, passing times, stopping locations, special notices, etc); the current state of key functions in the train (such as for analysis and fault finding purposes); and/or the control of on-train functions (via control centre 120) while the train is connected to the interface connector 100 (such as the control of doors, lights on the train etc). In some embodiments, in addition to the control centre 120, the control of on-train functions may be undertaken by a remote control centre 151. Such a remote control centre may be coupled to the local control centre 120 via the high speed interface line 150. The remote control centre may allow monitoring of any on-train security cameras, for example, or analysing technical performance data which has been logged. In some cases there may be more than one remote control centre, each having different responsibilities for particular aspects of control and data monitoring.

With the train securely connected to the interface connector 100, end vehicles of the train 99 (such as the locomotive 60) may be disconnected from the train formation as desired. For example, the driver may request to uncouple from the carriage 61, which causes the train management computer 80 to request the interface module 70 to send a command asking the control system of the locomotive coupler to uncouple. This causes the coupler control system to send a wireless 'request to uncouple' message to the joined coupler on carriage 61. If both couplers agree, they retract to their respective vehicles as shown in Figure 8c. The train management computer 81 in the driving trailer 63 is arranged to detect this uncoupling process and subsequently determine what vehicles the new train formation comprises, which is this example is the two unpowered carriages 61, 62 and the driving trailer 63. As illustrated in Figure 8d, the driver of the locomotive 60 may then depart to a depot for refuelling and servicing.

If power was being supplied to the bus lines 50 from the locomotive 60 (rather than the interface connector 100), the control centre 120 is arranged (via the train management computer 131 and switch gear 121) to reconnect power to the bus lines 50 - the control centre is arranged to detect the interruption of the electrical power supply.

The train 99 may thus be left at the terminus of the railway station overnight, connected to the interface connector 100, which is able to monitor key characteristics of the train 99 via the control centre 120. Any problems encountered by the train 99 during the day (which would be logged via the train management computers 80, 81) can be readily detected such that, if required, the train can be transferred to a depot for repair. This arrangement may contribute to lower overall energy consumption and reduced wear and tear on both rolling stock and track, by cutting out some unnecessary empty stock movements, as complete trains may not have to be transported to a remote depot every night if there are no faults to be fixed and routine tasks such as cleaning can be arranged locally instead.

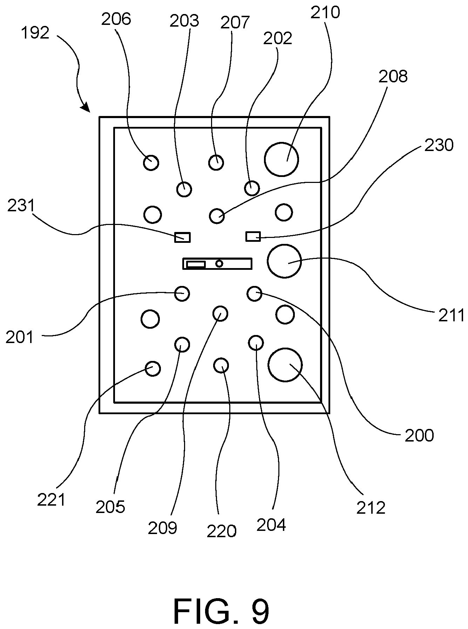

The electrical power and data interface provided by one of the interface contacts 91, 92 of the connection interface 187 will now be described in more detail. Figure 9 illustrates male interface contact 192 of the connection interface 187 of the coupler head 101. It will be apparent to those skilled in the art that other configurations of interface facilities are possible using the same principles, and more or less functions and techniques may be added or removed as required, depending on the use application of the interface connector 100. All of the sub-interfaces within the interface contact have bi-directional capability, allowing controls, data, electrical power etc to flow in either direction through the interface contact between stationary vehicles and the interface connector, the direction of flow being dependent on the positions of sources and recipients of particular functions within the connected configuration. In some cases, there may be only one source and one destination, and in other cases, there may be one source and multiple destinations. In yet other cases, there may be multiple sources and multiple destinations, leading to the possibility of an interface being used in both directions at different times.

In this embodiment, a first interface of the interface connector 192 is defined by electrical connections 200, 201 for the ECP (Electronically Controlled Pneumatic) braking system of the train 99. These connections may provide two functions: a 230V DC electrical supply to power the braking modules of the train, and a modulation system to send controls for the brakes. The 230V DC power may be supplied from a power supply unit within the control centre 120. A second interface is defined by electrical connections 202, 203 to control the speed and acceleration of the train. This interface may be a serial communication channel, using one data connection 202 and a clock signal 203 to send commands to traction control modules in the train. A third interface is defined by electrical connections 204, 205 to control door locking and release mechanisms throughout the train. A fourth is defined by electrical connection 206 for the traditional bell signal used on some kinds of passenger train to communicate between on-board staff, for example from a guard (conductor) to the train driver to indicate that the train is ready to depart. A fifth interface is defined by electrical connection 207 for the 'coupling event' signal that is activated during any changes in coupling status. This signal alerts train management computers, energy management systems and other functions to perform their tasks whenever the train formation changes.

The interfaces for speed control, door locking, bell signals and coupling events all share a common return connection, which is nominally earth (ground), but is linked through to all vehicles separately to reduce interference issues. Systems sensing the signals for these functions use differential inputs relative to what the common return wire regards as earth (ground). Two electrical connections 208, 209, that are in parallel, are allocated for the common return connection. Between the male and female interface contacts 191, 192, there are therefore four connections in parallel for this connection. In this way, up to three of the connections can fail before major problems arise.

The sixth interface is defined by the high power electrical supply, which uses three connections 210, 211, 212. This is primarily utilised for on-board services of the train, such as heating, lighting and air conditioning, for example coming from a locomotive to passenger carriages, and is variously known as head-end power, ETS (Electric Train Supply) or the 'hotel bus'. This may be achieved, for example, using a three-wire distribution system, with a centre tapped single phase AC supply of 1000-0-1000V at 50 or 60Hz having a maximum current of 200A through each connection 210, 211, 212. Vehicles not requiring this power at all themselves without any requirement to relay such power to other vehicles either may omit the high power cables altogether; in this case the connections 210, 211, 212 are left unconnected.

The seventh interface is defined by electrical connections 220, 221 for self-testing purposes, to check the success and quality of connection being achieved through the interface contact. In the female interface contact 191, the two corresponding connections are connected together. When the interface connector and coupling arrangement of the vehicle join, a current is transiently passed through this link between connections 220 and 221 in the male interface contact 192, the small voltage between them being measured. If this voltage is below a pre-determined value, the connection is deemed to be successful (as contact resistance is deemed sufficiently low). If the voltage is above the threshold, the connection is considered a failure and the pins of the male connector 192 are arranged to retract. The pins then extend again in a second attempt to make better contact. This movement and scraping action of the contacts relative to each other may dislodge pollutants and corrosion on the contacts after a long period of disuse. Should the second attempt at connection also produce an inadequately low contact resistance, the fault is logged and the corresponding management computer is informed.

The eighth interface is defined by an optical fibre connection 230 for the train information bus, a standardised mechanism for train management computers and other equipment to ascertain which vehicles are in the train formation and to control and monitor all kinds of functions throughout the train. Every vehicle (or every group of permanently coupled vehicles) contains a Vehicle Identification Module (VIM), which has two major functions. Firstly, it allows any vehicle to communicate with any other vehicle coupled to it, relaying information to and from more distant vehicles further down the coupled chain. Secondly, it contains non-volatile memory to store comprehensive data about the vehicle itself. In effect, the vehicle contains a definitive copy of its own design and operation manual, kept up to date when any modifications are carried out by authorised staff. Each VIM may have a back-up battery power supply, as power consumption of the VIM is relatively low in standby.

The train information bus interface is arranged to be bi-directional using a time division multiplexing scheme, such that packets of data are sent in either direction via the same optical fibre, each end being linked to a transmitter and receiver in the VIM. The transmitters and receivers at each end of the fibre connection synchronise their operation together in antiphase, so that data flows first one way and then in the opposite direction. In contrast to the paralleling of the electrical signals in the interface connector, each optical fibre from a connector is brought back to the VIM separately. This allows the VIM to monitor and to drive both fibres from its coupling arrangement, and for all functions to operate fully, even if one fibre breaks.

The ninth and final interface is defined by an optical fibre connection 231, which provides a general purpose high-speed digital data link with many functions multiplexed together, with spare capacity for future facilities. This interface has the same structure as that described for the train information bus, the connection 231 being connection to Digital Communication Module (DCM) within the vehicle. Bi-directional communication is provided by time division multiplexing as before.

In summary, the train information bus connection 230 is for low bandwidth data applications and the high speed data connection 231 is for higher bandwidth applications (such as video data streams etc).

The unreferenced components illustrated in Figure 9 relate to the mechanism for joining the male and female interface contacts together and for operating their respective protective shutters.

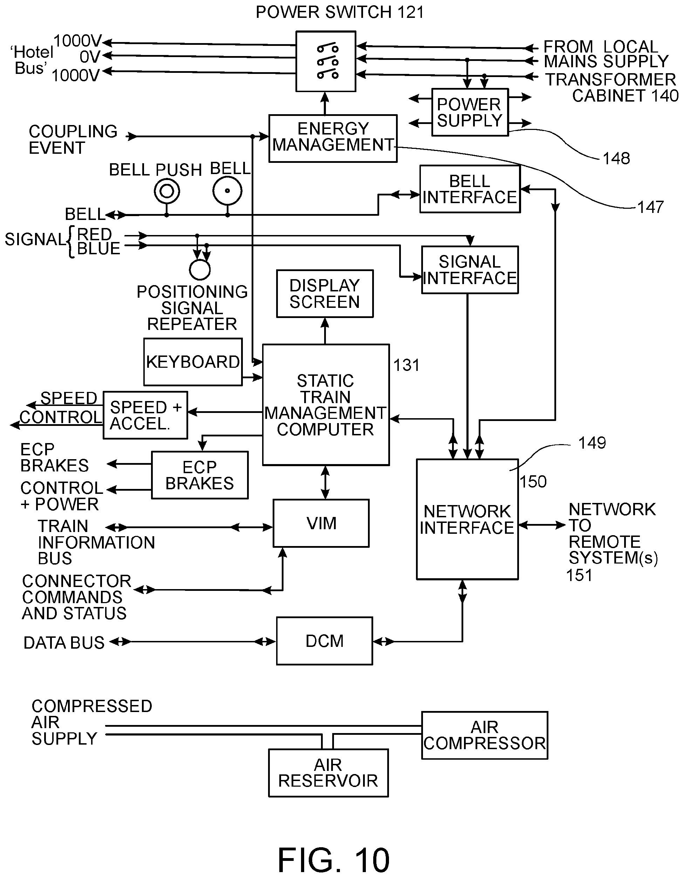

Figure 10 illustrates the components of the control centre 120 in more detail. Connections extending to the left-hand side of the Figure are connected to the interface connector 100, or to destinations within the housing 103 or proximity sensor 107 (in embodiments comprising the proximity sensor). The two connections extending from the right-hand side of the Figure are power from the transformer 140 and the high speed interface line 150 to remote data processing facilities 151. The high speed interface line 150 may be an optical fibre, microwave radio or any other known networking technology appropriate to accommodate the data bandwidth required for high speed data processing.

The network interface arrangement 149 combines the data flows to and from the static train management computer 131, the DCM data communication module, and the bell signal instructions. It also receives an 'in range' signal from the proximity sensor, as will be described later. The static train management computer 131 controls the functioning of the overall interfacing system locally when required via conventional user inputs (such as a keyboard and a display screen) - other known user input methods, such as a touch screen, may be alternatively employed. Interfaces connected to the static train management computer 31 accommodate the ECP brakes modulation, and the speed and acceleration protocols. In this example, the ECP interface provides a 230V DC power from the power supply provided to the control centre 120. Most of the interaction between the connected train and the static train management computer occurs via the VIM module, as described earlier.

In some cases, the control centre 120 may comprise additional equipment connected to the DCM module to accommodate data transfer to or from the high speed data connection 231. However, this may be passed directly on to or from the high speed interface line 150 to be processed by other remote data processing facilities 151.

The power supply 148 provides the various voltages required for all the equipment of the control centre 120, as well as those required for various parts of the interface connector 100 (not shown in Figure 10). The power switch 121 is controlled by the energy management arrangement 147, which reacts to the coupling event signal as described above, and may also be controlled by commands from the connected train by signals from the VIM modules (not shown). Local emergency cut-off buttons may also be provided by the control centre 120.

The air compressor operates when required to maintain the desired air pressure when the reservoir is depleted.

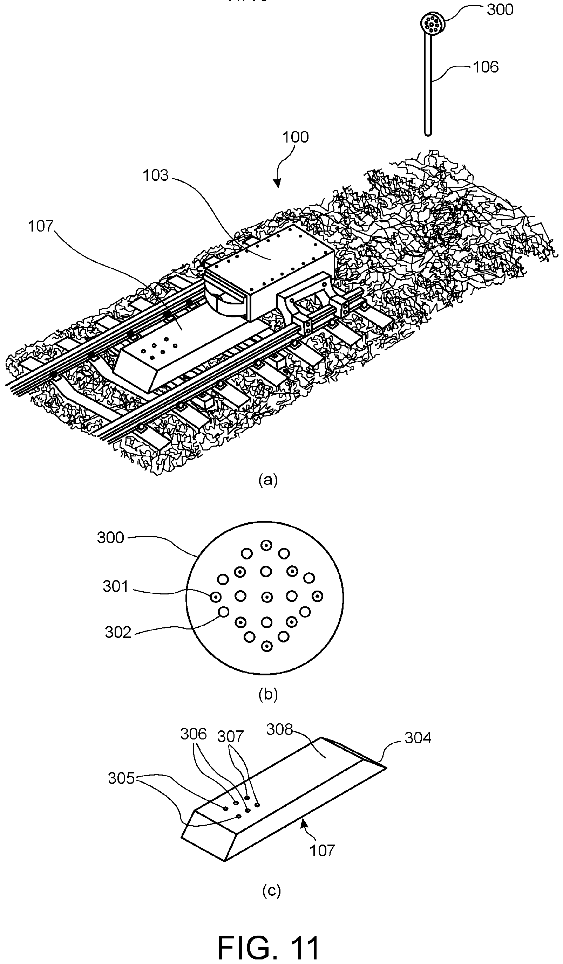

As described earlier and illustrated in Figure 11a, in some embodiments, the interface connector 100 includes a proximity sensor 107. The proximity sensor is connected to the control centre 120 and arranged to detect a vehicle as it approaches the interface connector 100. In some embodiments, the proximity sensor comprises a display arrangement that is connected to the proximity sensor and produces a visual warning signal in response to an output of the proximity sensor. In this way, the display arrangement can visually indicate to nearby operators when a vehicle is within (or outside) the connection range of the interface connector. The configuration of the display arrangement and the proximity sensor will now be described.

In this embodiment, the display arrangement comprises a display head 300 that is mounted on a post 106 in a location that is readily visible to nearby operators, such as from the approaching end of the train (such as a cab window), from any location looking along the side of the train, or from any platform alongside. The post 106 is mounted behind a rear end of the interface connector 100. In some embodiments, the display head 300 may be connected to other suitable structures in suitable locations, such as a platform canopy or the end wall of a depot (rather than the post 106).

As illustrated in Figure 11b, the display head 300 comprises a matrix of blue light emitting diodes (LEDs) 301 and red LEDs 302 intermixed in a central region of the display head 300 in a substantially circular spatial arrangement. Other embodiments may comprise different colours and spatial arrangements of the LEDs. The spatial arrangement of the red LEDs to the blue LEDs is such that when both groups of LEDs 301, 302 emit light of an equal brightness, the display head produces a mid-purple light when viewed at a distance. The display head 300 is connected to the proximity sensor 107 (such as via cables) such that an output of the proximity sensor 107 drives the LEDs 301, 302.

When the interface connector is installed for use, which in this embodiment is on a railway track, the proximity sensor 107 is mounted a predetermined distance from the housing 103, and thus from the coupling body, to the rails 105 via cross ties 111, 112 (shown in Figures 4a and 4b). The proximity sensor is located in front of a front side of the interface connector 100 and between the railway tracks (shown in Figure 11a). In this way, the proximity sensor is between the interface connector 100 and a railway vehicle as it approaches the interface connector via the railway track, allowing the proximity sensor to detect the vehicle as it approaches the interface connector. The cross ties can be easily removed if desired, allowing easy installation or removal of the proximity sensor as required.

As illustrated in Figure 11c, the proximity sensor comprises a trapezoidal body 304 having three of optical components 305, 306, 307 on an upper surface 308 of the body of the proximity sensor 107. The body 304 may serve to house other electrical components of the proximity sensor (not shown). In other embodiments, the body may have another suitable shape. The optical components 305, 306, 307 are colinearly arranged relative to one another and face upwardly through light permissible (i.e., transparent) upper surface 308. In some cases, the upper surface 308 has transparent windows arranged above each optical component. In other embodiments, the entire upper surface 308 is transparent and/or is removeable.

Each optical component is mounted at a different pre-determined distance from the housing 103. The component 305 is mounted at a distal end of the proximity sensor, the component 307 being at an end proximate to the housing and the component 306 being between the other components 305, 307. In this embodiment, each optical component comprises a pair of transversely arranged optical elements. This provides contingency in case of one of the optical elements being blocked by an obstacle (such as a leaf). In other embodiments, each component may comprise a single optical element. The central component 306 comprises two infrared LEDs (i.e., emitters for light in the infrared spectrum). The component 307 comprises two infrared photodetectors (such as photodiodes or phototransistors - i.e., receivers for receiving light), which forms a sensor for the red LEDs 301 in the display head 300. The component 305 also comprises two infrared photodetectors, which forms a sensor for the blue LEDs 302 in the display head 300. In other words, the outputs from the photodetectors of the components 305, 307 drive the outputs of the blue and red LEDs 302, 301 respectively.

Although the components 305, 306, 307 are spaced some distance apart (to provide contingency against components being blocked by obstacles), the optical elements within each component are angled inwards towards a central longitudinal axis of the signal sensor unit 107. In this way, each component illuminates (or senses the illumination from) approximately the same areas of the underside of the approaching vehicle. More specifically, in this embodiment, the coupling arrangement of the approaching vehicle has the same structure as the coupler head 101 of the present invention. Therefore, in this regard, the optical components are spaced and angled to illuminate (or sense illumination from) the coupler shields of the approaching vehicle. A height of the proximity sensor 107 (i.e., a length between the upper surface 308 and the ground surface beneath) is such that an underside of a railway vehicle (more specifically the coupling arrangement of the vehicle) may pass over the proximity sensor.

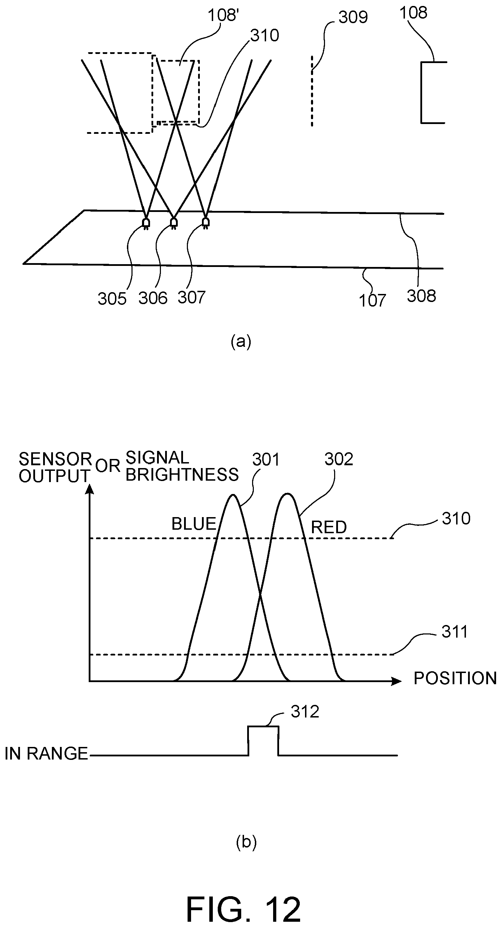

As illustrated in Figure 12a, the LEDs of the central component 306 generates infra red light beams upwards with a conical divergent pattern. The photodetectors of the components 305, 307 have a similar conical sensitivity or detection pattern to the infra red light approaching them. The central LEDs of component 306 have a wider illumination angle than the narrower sensitivity or detection angle of the photodetectors. An overall detection range of the proximity sensor is thus defined by the combined detection range of the components 305, 307.

When a rail vehicle is not in close proximity to the proximity sensor 107, the infra red light emitted by the component 306 is not obstructed - no emitted light is reflected towards and detected by the photodetectors. Thus, the red and blue LEDs 301, 302 of the display head 300 are not illuminated. When a vehicle approaches the proximity sensor 107 (shown in Figure 12a as approaching from the left-hand side), the emitted infra red light is reflected from the underside 310 of the shield 108 of the coupler head of the vehicle towards the photodetectors of components 305, 307. As the vehicle first approaches, emitted light is first detected by component 305, which drives the blue LEDs 301 in the display head 300. As the vehicle moves closer towards the interface connector, the reflective portion of the coupler shield occupies more of the overlapping area of the light source illumination and the sensor sensitivity. Thus, more emitted light is received by the photodetector of component 305, resulting in an increased output or brightness of the blue LEDs 301 up to a maximum brightness.

Further inward movement of the vehicle causes the reflective portion of the coupler shield 108' to begin moving out of the sensitivity area of component 305 - less infra red light is detected and so the brightness of the blue LEDs 301 begins to decrease. As this occurs, the coupler shield begins to move into the sensitivity area of component 307, which drives the red LEDs 302 in the display head 300. Consequently, red LEDs 302 begin to illuminate. Similarly, a brightness of the red LEDs 302 increases to a maximum as the vehicle moves nearer to the interface connector.

In this embodiment, the underside of the vehicle, and other nearby components, are arranged to be non-reflective to infra red light. In this way, the optical components 305, 307 do not detect a significant amount of light when these non-reflective components block the block emitted light from the optical component 306. Only the underside 310 of the coupler shield 108' is reflective such that the proximity sensor 107 is able to accurately detect where the coupler shield 108' of the approaching vehicle is relative to the interface connector. The reflective surface of the coupler shield 108 is a light scattering material (rather than simply a reflective material). This ensures that the angles of the incident and reflection of the emitted infra red light are not critical, and the photodetectors will respond to the entire illuminated area effectively.

The dotted outline of the coupler shield 108' in Figure 12a represents an ideal stopping position of the vehicle. In this position, the reflective underside 310 of the shield 108' occupies equal areas of the detection range of each component 305, 307. This will result in equal outputs of the components to their respective LEDs 301, 302, resulting in an equal brightness of red and blue light emitted from the display head 300. If the vehicle stops in this position requests to connect to the interface connector, the coupling arrangement of the vehicle and the coupling body of the interface connector will extend towards each other at the same time, meeting together midway between their previous positions as indicated by dotted line 309.

In other words, the display head 300 is arranged to display a visual signal that changes colour depending on the proximity of an approaching vehicle to the interface connector - the colour represents the proximity of the vehicle to the interface connector. In this embodiment, an overall emitted blue colour of the display head 300 indicates that the coupling arrangement of the vehicle is 'too far' or out of the connection range of the interface connector. An overall emitted red colour indicates that the coupling arrangement of the vehicle is 'too close' to the interface connector. A minimum coupling distance is required due to the arrangement of the shields 108 of the coupler head 101, which, as described above, pivot open to expose the connection interface 187 as the coupler head 101 is extended from within the housing 103.

The brightness of the blue LEDs 301 and the red LEDs 302 thus changes as the vehicle passes over the proximity sensor. The brightness of the blue LEDs is at a maximum when the vehicle is proximate to the component 305. As the vehicle approaches the component 307, emitted light from the display head 300 gradually transitions from blue, through various shades of purple, to finally red. The ideal connecting position of the vehicle is represented by a particular shade of purple with equal blue and red components; the vehicle being slightly further away will give a more bluish purple hue and the vehicle being slightly closer will give a more reddish purple hue.

The distance of the optical components 305, 306, 307 from the interface connector, and their spatial arrangement relative to each other, provides a detection range of the proximity sensor 107 that corresponds to the connection range of the interface connector. In this embodiment, the detection range is broader or wider than the connection range of the interface connector. In this way, the proximity sensor can determine when the vehicle is in close proximity to the connection range (i.e., when the vehicle is proximate to component 305). No light is emitted from the display head 300 when the vehicle is beyond the detection range of the proximity sensor 107.

Figure 12b illustrates a graph of the amplitude of the outputs (such as a voltage output) of the photodetectors from components 305, 307 in relation to the position of the coupler shield 108 of the vehicle from the interface connector, which corresponds to the brightness of the blue and red LEDs 301 and 302 respectively.

When both outputs from the components 305, 307 are within a pre-determined range of magnitude (i.e., such as within a particular voltage range), an 'in range' signal 312 (shown in Figure 12c) is arranged to be generated. The in range signal indicates that the vehicle is now in the ideal position or suitably 'in range' of the connection range of the interface connector. The pre-determined range of magnitude both outputs must fall within to generate the signal 312 corresponds to the vehicle being within a subrange of the overall detection range, which is in this embodiment is generally between the components 305 and 307. The blue and red LEDs 301, 302 are also arranged to flash when the in range signal 312 is being generated (i.e., when the vehicle is within the defined subrange). The vehicle should now stop and apply its brakes fully, after which the coupling or connecting process between the coupling arrangement of the vehicle and the interface connector can begin.

In this embodiment, the coupling process is authorised by the control centre 120 (or a remote control centre via the control centre 120) in response to receiving the in range signal 132. The control centre then generates an instruction to the interface connector 100 to unlock the coupling process. Commands to couple can now be accepted, which may be initiated from within the vehicle adjacent to the interface connector, or from other vehicles coupled to it, or from the local control centre 120, or from any remote control centre linked to the interface connector. Once such a command has been accepted (such as by an exchange of signals between the interface connector and the vehicle using a short distance wireless communication method), the coupling process begins as described above. The initiation of the coupling process may be carried out automatically (via software protocols) or manually (via an operator using a display screen and user inputs) from any of the above mentioned locations, the operating methods allowed or prohibited in any particular situation being determined by software in the respective control systems.

When the coupling process is initiated from within the vehicle or other vehicles of a train coupled to it, a driver can request to couple to the interface connector after viewing the 'in range' visual signal from the display head 300 and stopping the vehicle or train with the 'in range' visual signal still active (e.g. a flashing purple colour). The control centre 120 (or a remote control centre via the control centre 120) then accepts this request and the coupling process begins. In an alternative embodiment, the in range signal 132 from the proximity sensor 107 may be transmitted (e.g., via a wireless protocol) to the vehicle such that initiation of the coupling process can occur automatically via software protocols in the vehicle (more specifically the train computers) in response to receiving the in range signal (which may also be transmitted automatically). In this embodiment, the display head 300 may sometimes be omitted, with local display indicators in the vehicle giving alternative equivalent displays for the benefit of any on-train staff; or the display head 300 may be kept for flexibility of use or for reassurance of platform staff observing operations from outside the vehicle, for example.

The proximity sensor may be used in combination with human operators and/or other automated systems to facilitate positioning and coupling operations to improve the safety and reliability of operating practices. In some embodiments, the proximity sensor and display may be omitted altogether if other available methods of positioning vehicles accurately prior to connection to the interface connector are considered to be sufficient.

The above-described subrange for activation of the in range signal 312 is provided by two predetermined threshold voltage levels; an upper threshold voltage level 310 and a lower threshold voltage level 311. The signal 312 is arranged to be generated only when both of the outputs of the components 305, 307 are between the threshold voltage levels 310, 311. These threshold voltage levels are not fixed. Instead, the lower threshold level 311 is a particular fraction of the upper threshold level 310. Should the reflective surface 310 of the coupler head 180' reflect less infra red light than usual, for example due to dirt or corrosion, the brightness of the blue and red LEDs 301, 302 will also be less than usual. However, the brightness of both colours will be affected equally, and the resulting mid-purple colour representing the optimum connecting position will not alter, as well as the generation of the in range signal 132. If an optical path is obstructed by an obstacle, the larger output from the pair of optical elements (of each optical component) is utilised for the reference, the smaller or non-existent output being ignored.

The infra-red LEDs 306 are not driven by a DC constant current source. Instead, they have a sinusoidal modulation of current (and therefore brightness) at a particular frequency - the frequency is selected to be unique from light modulation frequencies from common light sources, such as fluorescent lights or LED floodlights. The photodetector circuits are arranged to have a wide dynamic range to cope with varying ambient light levels, and their outputs are AC coupled so that any DC components are inconsequential. The resulting AC component from the photodetector circuit is then filtered to exclude all frequencies other than those near the correct LED modulation frequency, the filtered amplitude then being used to determine the brightness of the corresponding LED in the display head 300. Consequently, the processed outputs from the optical components 305, 307 are not affected by any artificial or natural light sources detected by the components 305, 307.

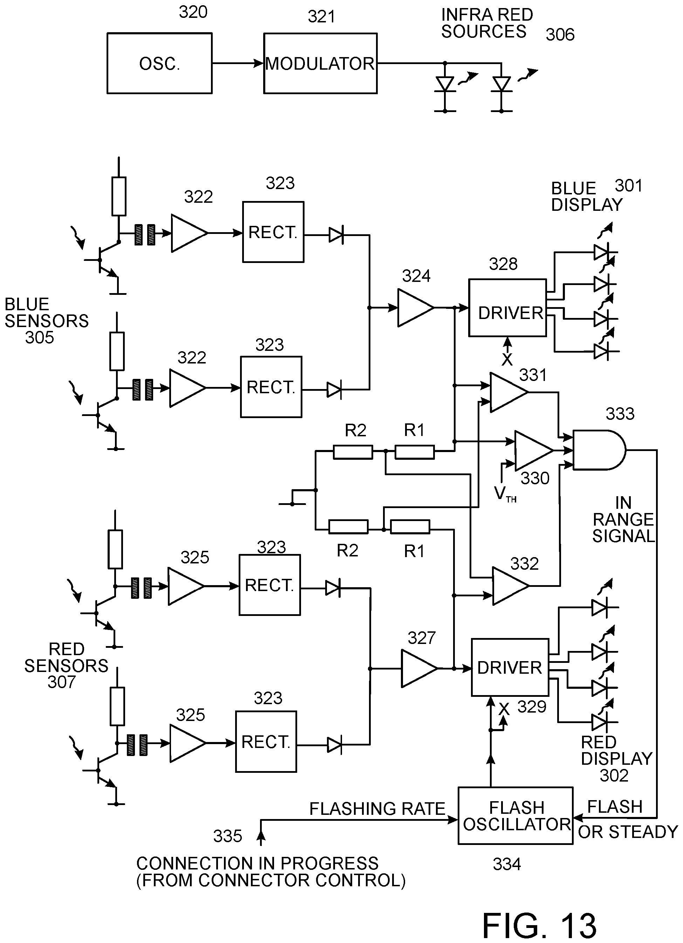

Figure 13 illustrates example circuit arrangements for the LED light source of the optical component 306, the photodetectors of the optical components 305, 307 and the corresponding drive circuits of the blue and red LED's in the display head 300, which are mounted within the body of the proximity sensor 107. An oscillator 320 generates sine waves which cause the modulator 321 to vary the amplitude of the current passing to the infra red LEDs 306. In this example, the photodetectors are phototransistors. For the sensing arrangement and corresponding blue LED driving arrangement, two phototransistors (i.e., optical component 305) are suitably biased to allow a wide range of ambient light levels and thus DC conditions. The desired AC signal is coupled via capacitors to amplifiers 322. The amplifiers 322 incorporate suitable bandpass filters allowing only frequencies corresponding to that of the oscillator 320 to pass through, other frequencies being substantially attenuated to exclude interference sources. Rectifier circuits 323 measure the amplitude of the resulting signals and output a corresponding DC voltage: normally both outputs will be equal but if one of the optical paths is disrupted the diode arrangement ensures that only the larger signal is passed on to the buffer amplifier 324 which in turn feeds the driver 328 for the blue LEDs 301 in the display head 300.

An identical circuit arrangement is used for the sensing arrangement and corresponding red LED driving arrangement. Outputs of the buffer amplifiers 324, 327 pass to potential divider resistor networks R1 and R2, the ratio R2/R1+R2 determining the fraction of the lower voltage threshold 311 compared to the higher voltage threshold 310. An AND gate 333 provides the in range signal 312 in response to suitable outputs from threshold detectors 331, 332, which define the upper and low threshold limits 310, 311, provided that a third threshold detector 330 has also determined that a minimum signal level is present. The threshold detector 330 is utilised to avoid spurious operation with very low level interference signals which randomly might fit the fractional criteria to activate the 'in range' signal. An active in range signal 312 causes a flash oscillator 334 to switch the LED drivers 328 and 329 on and off repeatedly, initially at a slow rate to indicate the coupling arrangement of the vehicle is in range, and then faster in response to an incoming signal 335 to indicate that connection in is progress. The signal 335 may be generated once request to couple commands have been exchanged between the coupling arrangement of the vehicle and the interface connector 100.

As described above, the in range signal 132 is also relayed to the control centre 120. This is achieved via the driver circuits 328, 329, which also relay their outputs to the control centre 120 (not shown in Figure 13). This facilitates operations when the control centre is located in a position where the visual signal displayed by the display head 300 is not easily visible (e.g., in a station office). The status of the in range signal is also monitored by an interface in the control centre 120 which passes its digitised output to the high speed interface line 150. Thus, the status of the in range signal may be accessed remotely from a remote data processing facility 151 via the line 150. This allows the remote control centre to detect when a vehicle has arrived in position for connection to the interface connector. As described above, the coupling between the coupling arrangement of the vehicle and the interface connector can then be initiated remotely from the control centre if desired, rather than from within the train or from the control centre 120, and once connected to the interface connector, the remote control centre can interrogate the connected vehicles for various information (such as to determine what vehicle has arrived).

In summary, the proximity sensor 107 (and corresponding display head 300) ensures that approaching vehicles are able to stop within the suitable connection range of the interface connector 100. If the coupling arrangement of the vehicle and the interface connector are too far apart, their respective extending mechanisms will reach the end of their capability. If they are too close, as described above, their respective shields may be unable to open due to colliding together in the early stages of extension, before there is sufficient clearance to fully open to expose their respective connection interfaces. This arrangement provides an easily visible and understandable visual signal associated with each interface connector to assist and/or give reassurance to staff in the vicinity (either on the train or nearby) that vehicles have stopped in the right place before connection is attempted. This visual signal might be viewed from relatively close by or a relatively long distance away, depending on the operating circumstances, and its visibility might be obscured sometimes by weather conditions such as fog. The arrangement for gradually transitioning from one colour to another facilitates guiding the driver to stop in the correct position for subsequent connection (rather than a simple two state 'digital' indication with a sudden change as a vehicle approaches the interface connector).

Returning to Figures 4a and 4b, as discussed above, the housing 103 of the coupling body 102 is mounted to a railway track 105 via frame members 104. As illustrated in Figures 14a and 14b, in some cases, the interface connector 100 is instead mounted to the railway track 105 via a buffer stop 110. The buffer stop may already exist and be mounted to a railway track. The interface connector 100 can therefore be retro-fitted to these buffer stops. In this arrangement, the housing 103 is mounted between a horizontal bar 109 of the buffer stop 110 and the railway track 105, such as via bolts to the leg portions of the buffer stop. Suitable spacers between the buffer stop legs and the sides of the housing 103 fill any gaps therebetween, spacers providing holes for the mounting bolts to pass through. The interface connector 100 is also mounted to the buffer stop 110 such that, when the interface connector is out of use (i.e., the coupling body is in the retracted position), ends of the shields 108 are positioned approximately level or slightly behind outer edges of the buffer contact heads 114. In this way, the shields do not contact an approaching vehicle as the vehicle contacts the contact heads 114. When the interface connector is in use, the coupler head 101 extends beyond the position of the contact heads such that the contact heads 114 are now behind the coupler 101 (i.e., the coupler head 101 is between the vehicle and the contact heads 114). The contact heads 114 do thus not obstruct subsequent connection between the coupling arrangement of the vehicle and the interface connector 100.

In some cases, vehicles may comprise both conventional buffers and a coupling arrangement that is extendable. In this case, the extension arrangements of the interface connector and the coupling arrangement of the vehicle allow connection between the same when the vehicle buffers and the buffer stop are in contact or a short distance apart. This arrangement therefore provides a suitable termination for a dead end siding used by rolling stock having either an extendable coupling arrangement and/or conventional buffers. In some cases, the interface connector 100 is mounted to the buffer stop 110 to accommodate other standard forms of coupler or buffers of the vehicle, such as override protectors.

The interface connector 100 of the present invention has been described thus far as interacting with a vehicle having an extendable coupling arrangement that is the same, or similar, to the coupling body 102 of the interface connector 100. As mentioned above, in some cases, the coupling arrangement of the vehicle may not be extendible. In this case, the coupling arrangement of the vehicle comprises the same coupler head arrangement, or a similarly configured connection interface, as previously described. However, this coupler head is not extendable relative to the vehicle, and the shields have a different configuration.

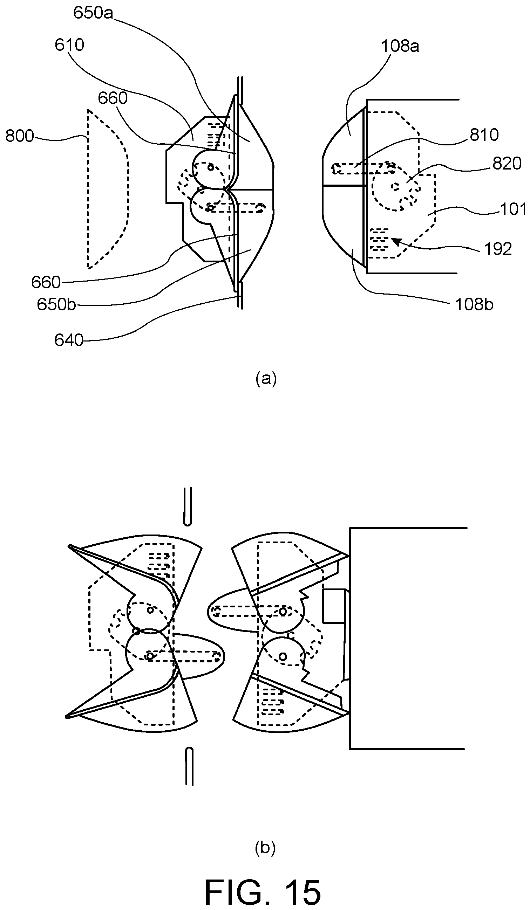

In this arrangement, as illustrated in Figure 15a, the coupler head 610 is slightly recessed behind a panel 640 at an end of the vehicle via an opening in the panel. The head 610 comprises pivotally connected shields 650a, 650b, as previously described. However, in this arrangement, flanges 660 of the shields are arranged to bear against an inside surface of an end panel of the vehicle when the shields are in a closed position (i.e., when the coupler head 610 is out of use). In this position, front ends of the shields protrude partially beyond the opening in the vehicle. A small inwards protrusion at the centre of the opening in the panel 640 (upper and lower edges, not shown) matches the profile of the flanges 640 such that, when the shields are closed and the coupler head is out of use, the arrangement provides in an effective seal against the outside weather.

As illustrated in Figure 15b, when the coupler head 610 is brought into use, the shields 610 are moved into an open position to expose a connection interface of the coupler head 610 (as previously described). To move the shields into the open position from the closed position, the shields, and thus the flanges 660, are pivoted away from the panel 640, exposing the connection interface.

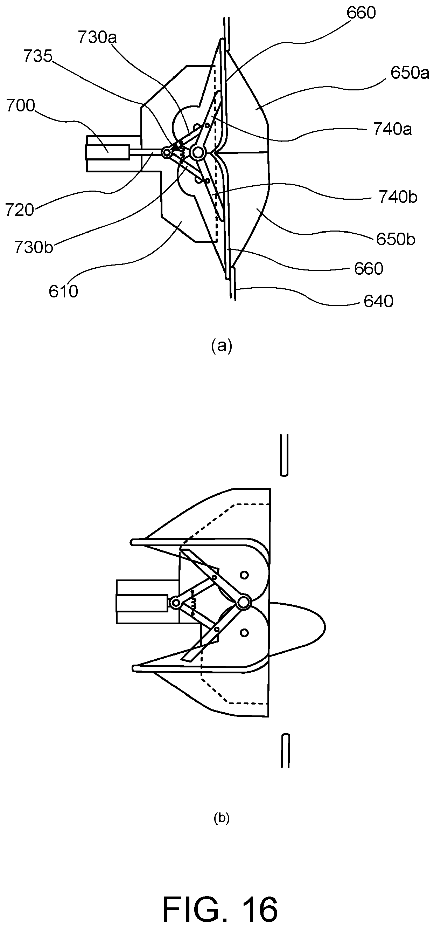

As illustrated in Figures 16a and 16b, the shields 650a, 650b are arranged to be moved between the open and closed positions via an air cylinder 700, which is mounted to the coupler head 610 via a bracket. The air cylinder is connected to a piston 720, which in turn is connected to pivotable levers 740a, 740b via respective coupling rods 730a, 730b. To close the shield from the open position (Figure 16b), the piston is extended towards the shields, causing the levers to contact the flanges 660a, 660b. Consequently, the shields are pushed towards the closed position (i.e., the flanges 660 are pushed towards the panel 640 until they contact the same). The coupling rods are biased towards one another by means of a tension spring 735 connected therebetween. The arrangement imparts a bistable action to the levers 640a, 640b such that the levers will occupy either the arrangement illustrated in Figure 16a or the arrangement illustrated in Figure 16b if no air pressure to the cylinder 700 is supplied to overcome the bias.

The open the shields from the closed position (Figure 16a), the piston is extended away from the shields, which in turns retracts the levers 640a, 640b from the flanges 660a, 660b. Biasing means (not shown) connected between each shield and the body of the coupler head 610 (such as a spring) retracts each shield into the open position. Thus, movement of the piston causes movement of the shields. In some embodiments, the cylinder 300 may be replaced with some other suitable arrangement for moving the shields between the open and closed positions (such as a linear actuator, an electric motor with suitable gearing etc).

The coupler head 610 is surrounded by and mounted to a support frame (not shown). The support frame is mounted to the vehicle via a gimbal frame (not shown), which surrounds the support frame, and thus surrounds the coupler head 610 and shields 650. The gimbal frame comprises upper and lower bearing arrangements that receive upper and lower axles that are attached to the coupler head support frame. This allows the coupler head 610 to pivot about the axles in a horizontal plane. Side axles of the gimbal frame are received by respective bearing arrangements on struts (not shown) that are mounted to the panel of the vehicle 640. In this way, the coupler head 610 can also pivot about the side axles in a vertical plane. In this regard, the gimbal frame is sized to provide sufficient clearance for the vertical and horizontal pivoting of the coupler head 610. This arrangement allows the coupler head 610 to accommodate vertical and horizontal movements (in line with the coupler head of the interface connector 100).

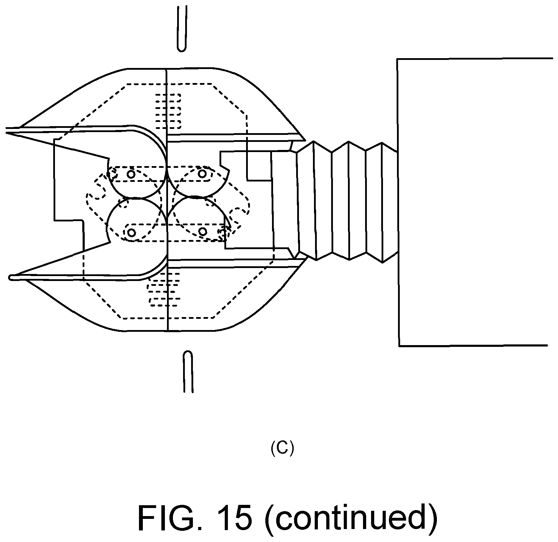

As before, the coupling process may be initiated by the interface connector 100 (more specifically the control centre) or the vehicle, manually or automatically, as previously described. Returning to Figure 15a, the vehicle has stopped within the connection range of the interface connector 100. Once the couple commands have been exchanged and accepted, the shields of the coupler head 610 are opened from the closed position (shown in Figure 15b), and the extension process for the coupling body 102 of the interface connector 100 begins. The coupler head 101 of the interface connector 100 is extended towards the coupler head 610 until it contacts the coupler head 610 (shown in Figure 15c), the discs 820 and links 810 of each Scharfenberg style mechanical coupling arrangement also coming into contact. Extension of the coupler head 101 stops once the Scharfenberg discs rotate and lock the mechanical coupling arrangements together. Finally, the pins of each male interface extend towards and join sockets in each respective female interface contact. The uncoupling process occurs in the reverse order.

In some cases, an underside of the vehicle may comprise a reflective panel 800 comprising a material for scattering infra red light. The panel 800 facilities detection of the vehicle by the proximity sensor 107 and thus allows the vehicle to stop in a suitable position for connection to the interface connector 100 (for example by an operator seeing the visual signal from the display head 300). The panel 800 is mounted to the underside of the vehicle at a distance from the end of the vehicle such that the coupler head 610 is a suitable distance from and within connection range of the interface connector 100 when the vehicle stops - this distance will depend on the particular connection range of the interface connector 100 (and thus the detection range of the proximity sensor) and can be determined during manufacture of the interface connector and/or the vehicle.

The interface connector of the present invention can be utilised in a diverse range of applications and is able to connect to an approaching vehicle having a non-extending coupling arrangement or an extending coupling arrangement.

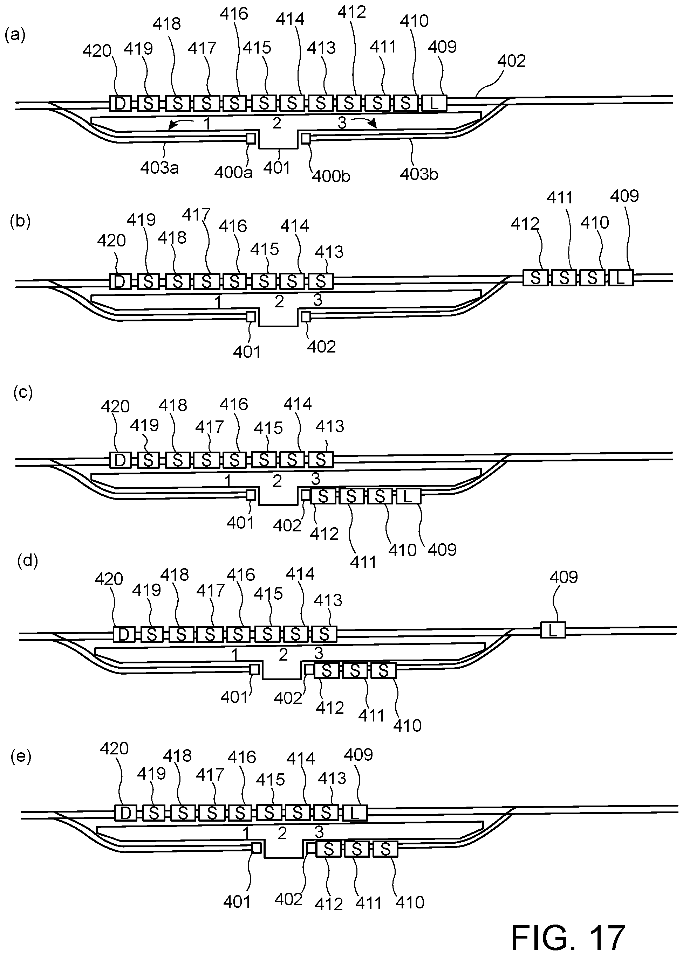

In one example, the interface connector is utilised with a long-distance overnight sleeping car train as illustrated in Figure 17a. In this example, a pair of interface connectors 400a, 400b are installed for use at an intermediate railway station 401. The station 401 comprises three platforms 1, 2, 3. Platform 2 is a long platform for a through railway line 402 and platforms 1 and 3 are shorter bay platforms for terminating railway lines 403a, 403b, each fitted with an interface connector 400a, 400b.

The sleeping car train comprises a locomotive 409, ten sleeping cars 410 to 419, and an energy recycling driving trailer 420. All of these vehicles are equipped with extending coupling arrangements. The sleeping cars 410 to 419, and the inner end of the energy recycling driving trailer 420, are equipped with automatic carriage connectors as described in the patent application GB2017855.4. These can be opened or closed remotely from the driving cabs in the locomotive 409 or energy recycling driving trailer 420, to allow access between vehicles or to close off the corridor connection. The energy recycling driving trailer 420, as described in the patent EP2476573 has a driving cab in the usual way to permit the train to be propelled by the locomotive, as well as hauled in the common push-pull arrangement.

In Figure 17a, the sleeping car train is travelling from the left-hand side to the right-side of the Figure and stops at platform 2. The driver in the front cab of locomotive 409 checks which sleeping cars are to be deposited at the station 401. In this example, the sleeping cars 410, 411, 412 are to be dropped at intermediate station 401, the remaining part of the train being expected to continue elsewhere. The driver activates a command to close the corridor connection between sleeping cars 412 and 413, and when that has been completed the driver then activates a second command to uncouple sleeping cars 412 and 413 from each other. Neither of these actions needs any vehicle movement; the vehicles remain stopped where they are with the brakes fully applied. The completion of the uncoupling process results in 'coupling event' signals in the (now two separate) coupled formations returning to the normal state, waking up the energy management systems in the locomotive 409 and energy recycling driving trailer 420, so after a short time delay locomotive 409 resumes supplying power to sleeping cars 410, 411 and 412 the energy recycling driving trailer 420 starts supplying power to sleeping cars 413, 414, 415, 416, 417, 418 and 419.

The train management computer in the locomotive 409 interrogates the train information bus and establishes that only three sleeping cars are coupled and performs various other checks (such as the new train weight etc). The driver moves the sleeping cars 410, 411, 412 to the position shown in Figure 17b, and then reverses into bay platform 3 (shown in Figure 17c). As the end of car 412 approaches the interface connector 400b, the display head of the interface connector will start to illuminate, first displaying blue and then the flashing 'in range' purple colour when the car 412 has entered the optimal position within the connection range of the interface connector 400b. The train then stops and the brakes are fully applied. Having confirmed that in this stopped position the flashing purple display is still being produced, the driver now sends a command to the end coupler of sleeping car 412 requesting to connect, and the interface connector 400b and coupler head of car 412 extend together and join, connecting the electrical and data connection of the train formation to the land-based electrical and data connections provided via the station 401. The display head ceases to emit its signal once the connection is complete. The control centre of the interface connector then takes over control of power generation to the sleeping cars 410, 411, 412 (and certain circuits in the locomotive 409 too). The driver then issues a command to locomotive 409 to uncouple from the car 410 and moves away from the cars 410, 411, 412 (illustrated in Figure 17d).

As illustrated in Figure 17e, the locomotive then reverses towards and re-joins the original train formation, taking control of the power supply of the cars in the formation again (after they were temporarily supplied from the energy recycling driving trailer when the locomotive was uncoupled). The main train formation can resume its journey, departing towards the right-hand side of Figure 17e.

The cars 410, 411, 412 in platform 3 are now connected to the interface connector (and thus its control centre) for a long stay. This allows all on-board services to remain operational as long as required, and communication links to be taken over by the control centre. Automatic diagnostic checks in the control centre can begin with stored data from monitoring systems of various kinds in the sleeping cars being passed to the control centre. This may help to determine whether the sleeping cars require a visit to a depot during the next day (i.e., for repairs), or whether they can remain in the station 401 with local cleaning and servicing only in preparation for the next evening's return service.

If the arriving sleeping cars to be detached at the intermediate station 401 are at the rear of the main train formation (rather than the front as described above), this can be accommodated via the other interface connector 400a provided at bay platform 1. In this case, as before, the corridor connections between the appropriate sleeping cars are first uncoupled. Then, the driver leaves locomotive 409 and enters the energy recycling driving trailer 420. The driver then moves the new train formation into bay platform 1, and the sleeping car at the front of the new formation can connect with the interface connector 400a. The driver can then uncouple the energy recycling driving trailer and move it back to re-join the main formation as before. Since the energy recycling driving trailer only has to move a few sleeping cars and itself a very short distance at low speed on a flat route, the energy stored in its battery from braking the weight of the whole train from high speeds is ample for such a task. This type of sequence can be repeated during the night as many times as required to serve multiple intermediate destinations. The sequence of sleeping cars in the formation can be arranged at the original departure point to suit the layout of the intermediate destination stations, with suitable terminal platforms to deposit the sleeping cars without disruption to other traffic, either facing in the same or opposite direction from the direction of outward travel. On the return journey, the sequences of Figures 17a to 17e are performed in reverse.

Utilising the interface connector in the above-described arrangement is advantageous because train vehicles connected to the interface connector can be supplied with comprehensive land-based electrical and pneumatic power and data processing and communication functions in a particular location without the need for a stationary locomotive or generator car to provide those facilities.. The locomotive that was providing these facilities previously in the moving train can be released to perform other tasks, such as taking another part of the train elsewhere. Further, this arrangement removes the need for staff members at the station to oversee the coupling process between the train formation and the interface connector, as all the necessary functions can be performed by the driver from a driving cab without the need to involve other staff in other locations. Even complex shunting moves to connect with land-based facilities such as those described can be performed quickly and efficiently, reducing the time needed to collaborate with other staff or to walk to different places to perform manual operations such as plugging in connectors. Overall the reduction of staff, equipment and time needed may make it economically feasible to serve intermediate locations on long distance overnight routes without requiring passengers to board or alight from trains at unattractive times.

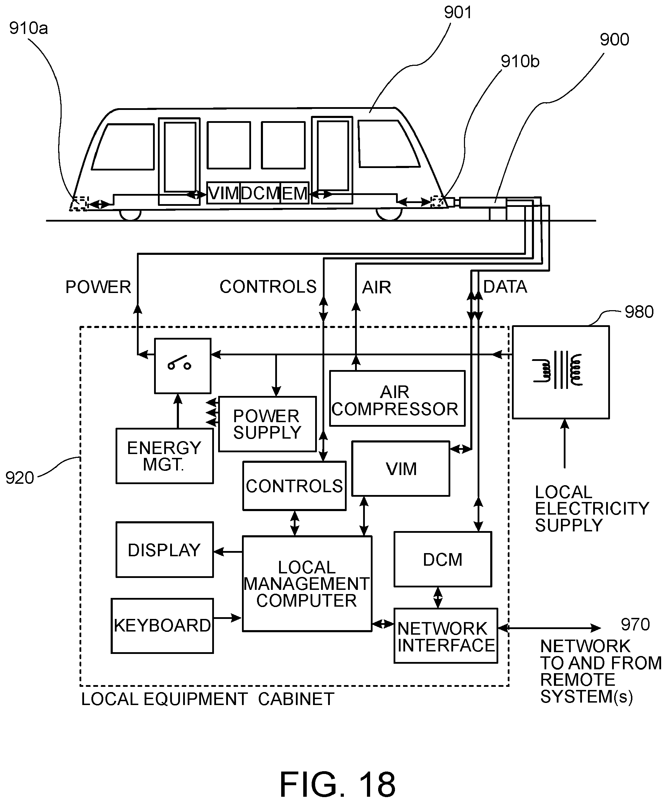

In another example, as illustrated in Figure 18, the interface connector 900 may be utilised with a tram 901 having non-extending coupling arrangements 910a, 920b, as described above with reference to Figures 15 and 16, at each end of the tram. In this arrangement, the interface connector 900 is provided at a tram terminus and connected to land-based electrical power 980 and data processing functions 970 via the control centre 920. The coupling process between the interface connector and the coupling arrangement 910b is initiated automatically when the tram is within connection range of the interface connector 900. Thus, there is no display head provided for the proximity sensor. The tram may comprise rechargeable batteries that are used to drive the tram when the tram is not connected to the interface connector, and that can be recharged when connected to the interface connector.

In a further example, the interface connector may be utilised with a battery railcar for a main line railway, typically for operating on a non-electrified branch line having modest passenger demand. The railcar comprises a non-extending coupling arrangement. In this case, the interface connector (and associated components such as the control centre) are provided at a branch line terminus for the railcar. The interface connector in such a location may be used in different ways at different times, for example to charge a battery railcar overnight, and then to pre-heat some carriages for a busier service before the locomotive arrives, and then to upload data describing the contents of some recently arrived parcels vans, etc. Vehicles are still able to access the facilities of the interface connector even if there other vehicles already connected to it, by temporarily coupling all vehicles together and using the wiring and data links in the vehicles to provide power and data facilities in any or all of the vehicles as required.

In yet a further example, the interface connector may be utilised with a zero emission battery electric bus. In this case, the bus comprises a non-extending coupling arrangement and the batteries of said bus are charged by the interface connector when the bus is connected to it at a terminal. In some cases, the non-extending coupling arrangement may be provided at a side of the bus, rather than at the front or rear end of the bus. In some cases it may be practical to use the same interface connector installation for both buses and trains, saving on capital costs. Similar arrangements could be made to provide common interface connectors for freight trains, zero emission road delivery vehicles and loading equipment such as fork lift trucks or conveyor belts.

Thus, the interface connector can be utilised with rail vehicles and road vehicles alike, these vehicles having either an extending coupling arrangement or a non-extending coupling arrangement that is compatible with the connection interface of the interface connector such that (electrical power and data) coupling therebetween may occur.

The interface connector thus provides several advantages. Firstly, there is no need for special interconnection wiring to plugs and sockets in the vehicles: the interfaces already in place for sharing power, control signals and data between vehicles when coupled also can be used for interconnection to land-based systems instead. In effect, every vehicle conforming to the above-described coupler head and interfacing standards is already equipped with a compatible combined shore power supply and data connector. Further, connection and disconnection of the land-based system to and from the vehicles may occur automatically and can be controlled from within any of the coupled vehicles or from any local or remote control point or workstation. This removes the need for a member of staff in the vicinity to manually plug in or unplug connectors. Further, the comprehensive range of interfaces available through the coupler heads allows many different functions to be performed simultaneously, perhaps with different actions in different vehicles of the coupled formation. Further, more than one stationary train can be serviced from a single land-based installation of the interface connector, by the simple method of temporarily coupling the trains together, an action which does not require further vehicle movement when the train must uncouple. The interface connector provides a combined power and data interface for vehicles to couple their power and data connection to land-based power and data processing functions. Compared with conventional methods of manually plugging in cables into appropriate sockets in vehicles, the interface connector allows the coupling process to be suitably controlled, and is thus more accurate, safer and less time consuming. The connection between the vehicle and the interface connector is also more robust than a cable, which could be cut easily. The interface connector is particularly useful for autonomous robotic vehicles, as connection and disconnection can be initiated automatically with no need for human intervention.

In summary, the interface connector has a very wide range of potential applications for many kinds of vehicles used individually, with potential for economies of scale through using common standards and components for all vehicle types.

## Claims

1. An interface connector (100) for connecting to a rail vehicle (9), the rail vehicle comprising a coupling arrangement (90) for coupling electrical power and data processing connections of the rail vehicle to the interface connector, the interface connector comprising:
a controller (120);
a coupling body (102) having a head (101) and a shank (189);
a housing (103) for mounting the interface connector to an immovable surface, the housing having an opening (113) for receiving the coupling body therethrough,
the coupling body being mounted to the housing via the opening such that the shank is within the housing, the mounting arrangement being such that the coupling body is moveable relative to the housing between a retracted position and an extended position, a distance between the head of the coupling body and the housing increasing as the coupling body moves from the retracted position towards the extended position; and
an extending mechanism (193) that is arranged to be actuated by the controller to move the coupling body any distance between the retracted position and the extended position,
wherein the head of the coupling body comprises:
a connection interface (187) for coupling land-based electrical power and data processing connections to the rail vehicle; and
means (186) for connecting the head to the coupling arrangement of the rail vehicle upon contact between the head and the coupling arrangement,
wherein, in use, the interface connector is mounted to the immovable surface.

2. An interface connector as claimed in claim 1, wherein the shank of the coupling body is mounted to the housing via the extending mechanism, a portion of the shank being in threaded engagement with the extending mechanism, the extending mechanism being mounted to the housing via a bearing arrangement (196a, 196b).

3. An interface connector as claimed in claim 2, further comprising an actuator (201) that is arranged, via the controller, to actuate the extending mechanism to move the coupling body relative to the housing.

4. An interface connector as claimed in claim 3, wherein the actuator is arranged to rotate the extending mechanism relative to the shank to move the coupling body relative to the housing.

5. An interface connector as claimed in any of claims 2 to 4, wherein the bearing arrangement is mounted to the housing via a gimbal frame (202).

6. An interface connector as claimed in any preceding claim, including a proximity sensor (107) connected to the controller and arranged to detect the vehicle as the vehicle approaches the interface connector, an output of the proximity sensor corresponding to a position of the vehicle relative to the proximity sensor.

7. An interface connector as claimed in claim 6, wherein the proximity sensor is arranged a predetermined distance from the interface connector such that the proximity sensor detects the vehicle when the vehicle is within a connection range of the interface connector.

8. An interface connector as claimed in claim 7, wherein a detection range of the proximity sensor is arranged to extend beyond the connection range of the interface connector for determining when the vehicle is proximate to the connection range.

9. An interface connector as claimed in any of claims 6 to 8, wherein the proximity sensor comprises a sensor housing (304) and a sensing element (305, 306, 307), the sensing element being provided by the housing for detection.

10. An interface connector as claimed in 9, further comprising a second sensing element, the first and second sensing elements being transversely opposed and arranged either side of a central longitudinal axis of the sensor housing, the sensing elements being angled towards the central longitudinal axis.

11. An interface connector as claimed in claim 9 or 10, wherein the proximity sensor comprises a further sensing element, the sensing elements being spaced relative to one another to provide the detection range of the proximity sensor.

12. An interface connector as claimed in any of claims 9 to 11, wherein the sensing element comprises an optical sensor arrangement, the sensor housing having a light transmissible cover (308), the optical sensor arrangement being arranged within the sensor housing for detection via the covering.

13. An interface connector as claimed in claim 12, wherein the optical sensor arrangement comprises:
an emitter for emitting light; and
a pair of receivers for receiving emitted light, an amount of emitted light received by each receiver corresponding to a position of the coupling arrangement of the vehicle relative to the receivers,
wherein the emitter and the pair of receivers are arranged colinearly relative to each other, one of the receivers being at an end of the sensor housing proximate to the coupling body and the other receiver being at a distal end of the sensor housing, the emitter being arranged between the pair of receivers.

14. An interface connector as claimed in claim 13, wherein a predetermined subrange of the detection range of the proximity sensor is determined by at least one of the outputs of the receivers, the predetermined subrange corresponding to an optimal coupling range between the head of the coupling body the coupling arrangement of the vehicle.

15. An interface connector as claimed in any of claims 6 to 14, wherein the controller or the vehicle is arranged to initiate connection between the head of the coupling body and the coupling arrangement of the vehicle based on the output of the proximity sensor.

16. An interface connector as claimed in any of claims 6 to 15, further comprising a display means (300) connected to the controller, the controller being arranged such that the display means produces a visual warning signal in response to the output of the proximity sensor.

17. An interface connector as claimed in claim 16, wherein a colour of the warning signal corresponds to a position of the vehicle relative to the proximity sensor, the colour being determined by the output of the proximity sensor.

18. An interface connector as claimed in any preceding claim, wherein the means for connecting the head of the coupling body to the coupling arrangement of the vehicle is a Scharfenberg coupling arrangement.

19. A combination comprising:
the interface connector as claimed in any of claims 1 to 18; and
a vehicle having a coupling arrangement for coupling electrical power and data processing connections of the vehicle to the interface connector.

20. A combination as claimed in claim 19, wherein the coupling arrangement of the vehicle is moveable relative to the vehicle between a retracted position and an extended position, a distance between the coupling arrangement of the vehicle and the vehicle increasing as the coupling arrangement of the vehicle moves from the retracted position towards the extended position.

21. A combination as claimed in any of claims 19 to 20, wherein the vehicle is part of a formation comprising one or more other vehicles, the electrical power and data connections between each vehicle being coupled together such that the electrical power and data processing connections of the formation is coupled to the interface connector when the interface connector is coupled to the vehicle.

22. A combination as claimed in any of claims 19 to 21, wherein the interface connector is mounted proximate to an end of a railway track (105) such that the head of the coupling body of the interface connector faces the coupling arrangement of the railway vehicle as the railway vehicle approaches the interface connector.

23. A combination as claimed in claim 22, wherein the proximity sensor of the interface connector is mounted to the railway track such that the proximity sensor is between the interface connector and the railway vehicle as the railway vehicle approaches the interface connector, the proximity sensor having a height such that the proximity sensor is below the railway vehicle as the railway vehicle approaches the interface connector.

24. A combination as claimed in claim 22 or 23, further comprising a buffer (110), wherein the interface connector is mounted to the railway track via the buffer such that contact points of the buffer for contacting the railway vehicle are between the interface connector and the vehicle when the coupling body of the interface connector is in the retracted position.
